(19) Europäisches Patentamt

**European Patent Office**

Office européen des brevets

(11) Numéro de publication: **0 275 735 B1**

(12) **FASCICULE DE BREVET EUROPEEN**

(45) Date de publication du fascicule du brevet:
**19.12.90**

(21) Numéro de dépôt: **87402799.8**

(22) Date de dépôt: **10.12.87**

(51) Int. Cl.⁵: **B64C 25/58,** F16F 9/08,
F16F 7/12, F16F 9/348

(54) Amortisseur-vérin, contre-fiche le comportant, et train d'atterrissage équipé d'une telle contre-fiche.

(30) Priorité: **12.12.86 FR 8617401**

(43) Date de publication de la demande:
**27.07.88 Bulletin 88/30**

(45) Mention de la délivrance du brevet:
**19.12.90 Bulletin 90/51**

(84) Etats contractants désignés:
**DE ES GB IT NL**

(56) Documents cités:
**EP-A- 0 051 506**
**EP-A- 0 072 323**
**FR-A- 2 274 834**
**FR-A- 2 370 196**
**FR-A- 2 554 415**
**GB-A- 668 543**
**GB-A- 726 898**
**GB-A- 2 132 313**

(73) Titulaire: **AEROSPATIALE SOCIETE NATIONALE
INDUSTRIELLE Société Anonyme dite:, 37, Boulevard
de Montmorency, F-75016 Paris(FR)**

(72) Inventeur: **Aubry, Jacques Antoine, 2 avenue Marie
Gasquet, F-13480 Cabries(FR)**
Inventeur: **Mauduit, Daniel André, Résidence Concorde
Batiment B Avenue H. Barrelet, F-13700 Marignane(FR)**

(74) Mandataire: **Lepeudry-Gautherat, Thérèse et al,
ARMENGAUD JEUNE CABINET LEPEUDRY 6, rue du
Faubourg Saint Honoré, F-75008 Paris(FR)**

**Description**

La présente invention se rapporte à un amortisseur-vérin, plus particulièrement destiné, entre autres applications, à équiper les trains d'atterrissage d'aérodynes, notamment d'avions légers ou d'hélicoptères, et plus spécialement adapté à l'équipement des atterrisseurs principaux de type dits "à balancier", l'amortisseur-vérin étant dans ce dernier cas disposé en position sensiblement verticale et de sorte que la fonction amortisseur, c'est-à-dire l'absorption élastique et amortie de l'énergie de descente de l'aéronef lors de son atterrissage soit remplie en compression sous la charge.

On a déjà proposé de nombreuses réalisations d'amortisseurs-vérins qui permettent d'assurer successivement et/ou simultanément les fonctions suivantes :

1°) la fonction d'amortisseur, lorsque l'aérodyne se pose et/ou roule sur le sol, à la suite de quoi l'amortisseur-vérin supporte également la charge statique que constitue le poids de l'aérodyne, lorsque ce dernier est immobile au sol,

2°) la fonction de relevage et de descente de l'atterrisseur, lorsque l'aérodyne est en vol, respectivement à la suite d'un décollage ou avant un atterrissage, et

3°) les fonctions de surbaissement et/ou de surélévation de l'aérodyne, connues également sous le nom de "baraquage" et de "contre-baraquage", ainsi que le retour à la position normale, train sorti, au moyen de commandes hydrauliques appropriées, le "baraquage" et le "contre-baraquage" pouvant être définis comme étant des opérations qui consistent respectivement à surbaisser ou à surélever l'aérodyne reposant sur les organes de contact avec le sol, tels que des roues, dont ces atterrisseurs sont équipés, au-delà de la position normale de l'aérodyne, de manière à faciliter certaines manoeuvres ou à améliorer certaines caractérisistiques de l'aérodyne.

Le "baraquage" permet en particulier de faciliter le chargement puis le transport d'un hélicoptère dans la soute d'un avion-cargo ou dans un hangar d'un navire porte-aéronef. Il permet également d'améliorer la stabilité dudit hélicoptère reposant sur le pont d'un porte-hélicoptère, porte-avion ou autres navires, voire même sur une plateforme en mer, en raison de l'abaissement du centre de gravité de l'hélicoptère, à la suite du surbaissement de ce dernier, diminuant sa garde au sol ce qui facilite de plus son ancrage sur son aire de stationnement.

Le "contre-baraquage" du train principal permet en particulier de relever l'arrière de l'appareil et, dans le cas où celui-ci est équipé d'une porte d'embarquement arrière, d'augmenter la hauteur de passage sous la queue pour l'embarquement d'un véhicule.

Des amortisseurs-vérins de ce type sont décrits dans les brevets et demandes de brevet français n° 2 340 482, 2 370 196, 2 461 852, 2 493 444 et 2 554 415.

La figure 1 du brevet français 2 340 482 représente un amortisseur-vérin dont la fonction amortisseur est remplie en compression sous la charge, et qui est essentiellement constitué des éléments suivants :

- une tige d'amortisseur, fixée par son extrémité supérieure à la structure de l'aérodyne, et dont l'extrémité inférieure porte un piston, muni d'un dispositif de laminage à orifices de laminage et à clapet également percé d'orifices de laminage, en regard d'une chambre périphérique délimitée dans la tige d'amortisseur qui est creuse autour d'une paroi cylindrique interne délimitant une chambre centrale mise à l'atmosphère par un canal traversant l'extrémité supérieure,

- une tige de vérin, qui est creuse et dont le volume interne est subdivisé en deux chambres par une cloison transversale, de sorte que la partie de la tige de vérin qui entoure la chambre supérieure constitue un corps d'amortisseur, dans lequel la tige d'amortisseur est montée coulissante avec étanchéité par son piston, cette chambre supérieure de la tige de vérin contenant un volume de liquide hydraulique qui, par passage au travers des orifices de laminage, pénètre dans la base de la chambre périphérique de la tige d'amortisseur, et l'extrémité inférieure de la tige de vérin étant aménagée en piston de vérin,

- un cylindre de vérin, qui se fixe par son extrémité inférieure à un organe de l'atterrisseur portant les éléments de contact avec le sol, et dans lequel la tige de vérin est montée coulissante avec étanchéité par son piston de vérin, qui délimite, dans le cylindre de vérin, d'une part une chambre de descente, qui, lorsqu'elle est remplie de liquide hydraulique, tend à repousser la tige de vérin hors du cylindre, pour amener l'atterrisseur en position train sorti, et qui délimite, d'autre part, avec la tige de vérin et le cylindre de vérin, une chambre annulaire de relevage, qui, lorsqu'elle est alimentée en liquide hydraulique, tend à faire rentrer la tige de vérin dans le cylindre de vérin, en vidant la chambre de descente.

Le verrouillage de l'amortisseur-vérin en position "train sorti" est assuré soit par un verrouillage hydraulique de la chambre de descente, remplie de liquide hydraulique, soit par un verrouillage mécanique assuré, par exemple, par des griffes élastiques portées par le cylindre de vérin et venant s'encliqueter élastiquement derrière un redan présenté par la partie inférieure de la tige de vérin, une coiffe de verrouillage et déverrouillage à commande hydraulique étant également prévue dans ce cas, dans la chambre annulaire de relevage, de sorte que l'alimentation en liquide hydraulique de cette dernière assure tout d'abord le déplacement de la coiffe de verrouillage, à l'encontre d'un organe élastique, en position de libération des griffes, puis, en raison de la pression qui se développe dans la chambre de relevage, la rentrée du piston et de la tige de vérin dans le cylindre de vérin, dont la chambre de descente est vidée par un clapet de décharge à ouverture commandée par la mise en pression de la chambre de relevage. Ceci permet le passage de la position train sorti à la position train rentré. Le passage de la dernière à la première de ces deux positions est obtenu en commandant, inversement, la mise en pression et le remplissage de la chambre de descente, et la vidange de la chambre de relevage, jusqu'à obtenir le fonctionnement du dispositif mécanique de verrouillage, ou en assurant le verrouillage hydraulique de la chambre de descente par un clapet de mise et de maintien en pression. Le fonctionnement de l'amortisseur à la partie supérieure de la tige de vérin est assuré de manière conventionnelle, toute charge de compression de l'amortisseur-vérin provoquant l'enfoncement de la tige d'amortisseur dans la tige de vérin, et l'amortissement de ce mouvement par dissipation d'énergie par laminage du liquide hydraulique contenu dans la chambre supérieure de la tige de vérin et passant par les orifices de laminage du piston d'amortisseur dans la chambre périphérique de la tige d'amortisseur, en comprimant dans celle-ci la chambre de gaz à basse pression qu'elle contient. Après l'enfoncement de la tige d'amortisseur dans la tige de vérin, la détente de la chambre de gaz basse pression comprimée repousse le liquide hydraulique de la tige d'amortisseur vers la chambre supérieure de la tige de vérin, ce qui tend à repousser la tige d'amortisseur hors de la tige de vérin, avec un freinage assuré par le laminage du liquide hydraulique dans les orifices de laminage du clapet prévu à cet effet. Après un atterrissage, à partir de la position train sorti, l'amortisseur vérin est sous charge statique (tige d'amortisseur partiellement rentrée dans la tige de vérin), et on fait passer l'amortisseur-vérin en configuration train baraqué en commandant la vidange de la chambre de descente, sous l'effet du poids propre de l'appareil.

Afin de diminuer encore l'encombrement de l'amortisseur-vérin en configuration train rentré, et, en particulier, afin que cet encombrement dans cette configuration soit sensiblement le même que dans la configuration train sous charge statique, l'amortisseur-vérin comprend de plus un piston de rétraction, monté coulissant avec étanchéité dans la chambre inférieure de la tige de vérin, et portant un fourreau creux qui traverse la paroi transversale de la tige de vérin, le volume de liquide hydraulique contenu dans sa chambre supérieure, et le piston d'amortisseur, ce fourreau ayant une butée supérieure par laquelle il est monté coulissant et retenu dans la chambre centrale de la paroi cylindrique interne de la tige d'amortisseur. Le piston de rétraction délimite ainsi, d'une part avec le piston de vérin, une chambre à l'air libre en communication par le passage central du fourreau avec la chambre centrale à l'air libre de la tige d'amortisseur, et, d'autre part, avec la paroi transversale de la tige de vérin, une chambre de rétraction de l'amortisseur, de sorte que, lorsque cette chambre de rétraction est alimentée en liquide hydraulique, en même temps que la chambre annulaire de relevage, le piston de rétraction est déplacé vers le piston de vérin et tire, par son fourreau, la tige d'amortisseur dans la tige de vérin. L'amortisseur-vérin présente alors son encombrement minimum, par rentrée de sa tige de vérin dans le cylindre de vérin et par rentrée partielle de la tige d'amortisseur dans la tige de vérin.

Cette réalisation, dans laquelle la chambre de descente du vérin présente l'avantage supplémentaire de permettre une prolongation de la course d'amortissement, en cas d'atterrissage en catastrophe, a fait l'objet de perfectionnements qui sont décrits dans le premier certificat d'addition n° 2 370 196 au brevet français 2 340 482.

Ces perfectionnements consistent essentiellement en la disposition, à la partie inférieure du cylindre de vérin, d'une chambre supplémentaire, adjacente à la chambre de descente, dont la chambre supplémentaire est séparée par un piston séparateur, rappelé par des moyens élastiques contre une première butée, de façon à limiter le volume de la chambre de descente, et susceptible d'être déplacé à l'encontre des moyens élastiques sous l'effet des dilatations du fluide hydraulique de la chambre de descente, de sorte que la chambre supplémentaire constitue une chambre d'accumulation des dilatations non seulement du fluide hydraulique de la chambre de descente, mais également du fluide hydraulique de la chambre de relevage et de la chambre de rétraction, en communication l'une avec l'autre, si la partie de la chambre inférieure de la tige de vérin qui ne constitue pas la chambre de rétraction est mise en communication avec la chambre de descente, c'est-à-dire si le piston de vérin est en fait un piston annulaire séparant les chambres de descente et de relevage. La chambre supplémentaire peut être remplie de liquide hydraulique, contenir un ressort appliquant le piston séparateur contre une butée correspondante à la base de la chambre de descente, et être en communication avec un clapet de dilatation, autorisant une vidange de la chambre d'accumulation lorsque le piston séparateur est déplacé contre le ressort par les dilatations du liquide hydraulique, ainsi qu'une réalimentation de la chambre d'accumulation lors de l'application d'une pression de descente dans la chambre de descente. Mais, dans une variante avantageuse, la chambre supplémentaire renferme un gaz sous pression, constituant simultanément un ressort pneumatique, appliquant le piston séparateur contre la butée correspondante, et une chambre d'amortissement supplémentaire, dont les effets s'ajoutent à ceux de l'amortisseur oléopneumatique à la partie supérieure de la tige de vérin. De plus, la chambre de descente est reliée à un clapet de surpression, autorisant la vidange de la chambre de descente, lorsque la tige de vérin est soumise à un effort supérieur à une valeur prédéterminée, de sorte que l'amortisseur-vérin se comporte comme un amortisseur à course prolongée en cas d'atterrissage en catastrophe. Enfin, selon une variante qui a été réalisée et équipe certains hélicoptères de la Demanderesse, la butée contre laquelle le piston séparateur est appliqué par le gaz à haute pression contenu dans la chambre supplémentaire est constituée sous la forme d'une cloison transversale interne au cylindre de vérin et présentant au moins un orifice, débouchant sur au moins un clapet de laminage situé entre la cloison et le piston séparateur, de façon à constituer un second amortisseur. Dans ce cas, la chambre de rétraction est alimentée par un canal ménagé à l'intérieur d'un manchon axial, solidaire de cette cloison, donc du cylindre de vérin, et coulissant avec étanchéité dans le piston de rétraction, ce manchon étant muni d'une tête élargie qui coulisse elle-même avec étanchéité à l'intérieur du fourreau solidaire du piston de rétraction et retenu en butée dans la tige d'amortisseur. Enfin, un second canal ménagé dans le manchon met en communication la chambre interne délimitée dans le fourreau, fermé à son extrémité supérieure dans la tige d'amortisseur, et s'étendant entre cette extrémité supérieure fermée et la tete élargie du manchon, avec la chambre de liquide hydraulique du second amortisseur, c'est-à-dire la chambre délimitée entre la cloison transversale du cylindre de vérin et le piston séparateur, de sorte que la chambre interne au fourreau de rétraction de la tige d'amortisseur dans la tige de vérin constitue une chambre d'extension pour le liquide hydraulique de la chambre de liquide de l'amortisseur haute pression ainsi aménagé à la base de l'amortisseur-vérin. On obtient ainsi un amortisseur-vérin équipé de deux amortisseurs, dont l'un, à la partie supérieure, comporte une chambre de gaz à basse pression, et dont l'autre, à la partie inférieure, comporte une chambre de gaz à haute pression, les deux amortisseurs étant séparés par un vérin, dont le cylindre reçoit la chambre de gaz à haute pression, cette dernière étant sollicitée à partir du moment où la charge de la chambre de gaz à basse pression dépasse la pression de gonflage de la chambre de gaz à haute pression.

Le brevet français 2 461 852 propose d'autres réalisations d'amortisseurs-vérins, représentées sur les figures 2 à 6, et qui comprennent un corps cylindrique, présentant deux chambres d'extrémité ouvertes axialement vers l'extérieur, une tige de vérin montée coulissante avec étanchéité dans la chambre d'extrémité inférieure du cylindre, et délimitant par sa face interne et par la face externe de sa partie engagée dans le cylindre respectivement une chambre de descente et une chambre de relevage, qui sont respectivement alimentées en liquide hydraulique pour commander la sortie et la rentrée de la tige de vérin du ou dans le cylindre, et une tige d'amortisseur montée coulissante avec étanchéité dans la chambre d'extrémité supérieure du cylindre, et renfermant une chambre de gaz à basse pression adjacente à un volume de liquide hydraulique en communication avec le liquide hydraulique contenu dans la chambre d'extrémité supérieure du cylindre par un dispositif de laminage, dont est muni un piston d'amortisseur, porté par l'extrémité de la tige d'amortisseur interne au cylindre.

De plus, ces amortisseurs-vérins comportent un fond mobile, aménagé en piston séparateur, sur lequel est appliquée la pression du liquide hydraulique régnant dans la chambre supérieure du cylindre, et lui-même en appui contre un élément à seuil d'effort constitué par une chambre de gaz à haute pression, autorisant une course du fond mobile, lors d'une charge en compression de l'amortisseur-vérin, à partir d'un effort supérieur à un seuil donné, correspondant à la pression de gonflage de la chambre de gaz à haute pression, et indépendamment de la vitesse d'enfoncement de la tige d'amortisseur dans le cylindre.

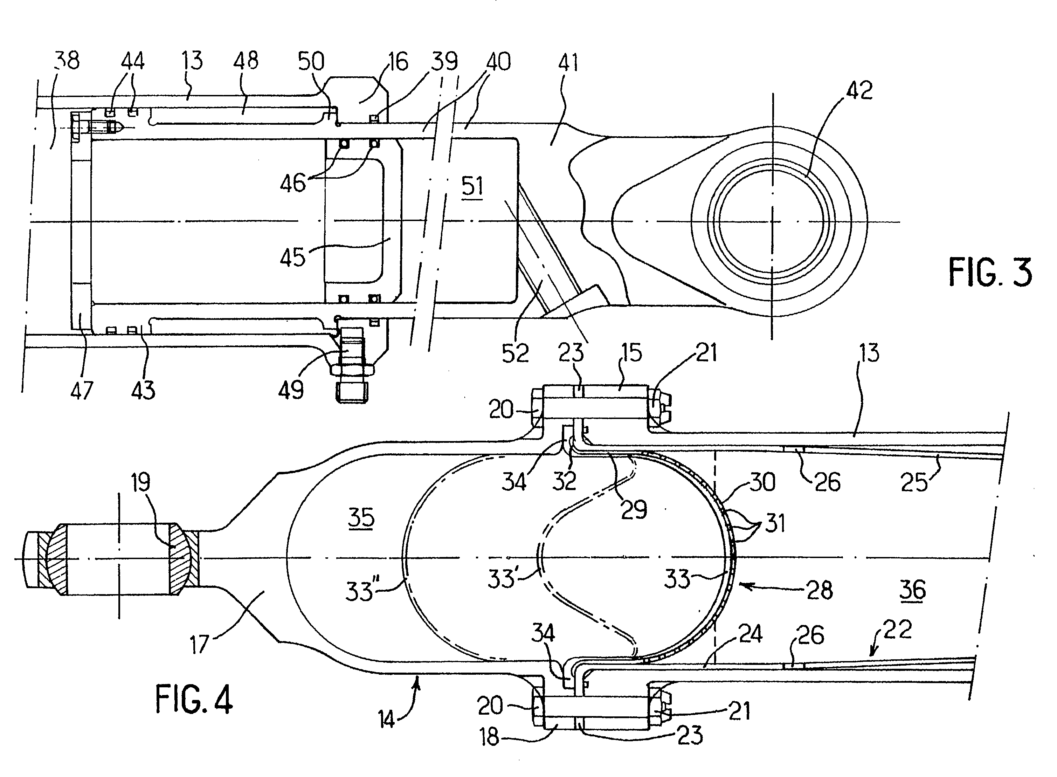

Dans certaines réalisations (figures 3 et 4), les deux chambres d'extrémité du cylindre sont séparées par une cloison transversale fixe, traversée par des canaux de communication de la chambre d'extrémité supérieure du cylindre avec une chambre annexe, dans laquelle sont logés le fond mobile et la chambre de gaz à haute pression, la chambre annexe étant soit une chambre annulaire du cylindre qui entoure sensiblement la chambre d'extrémité supérieure du cylindre et dans laquelle coulisse le fond mobile agencé en piston annulaire (figure 3) soit la chambre interne d'une bouteille ou capacité extérieure au cylindre et dans laquelle coulisse le fond mobile (figure 4).

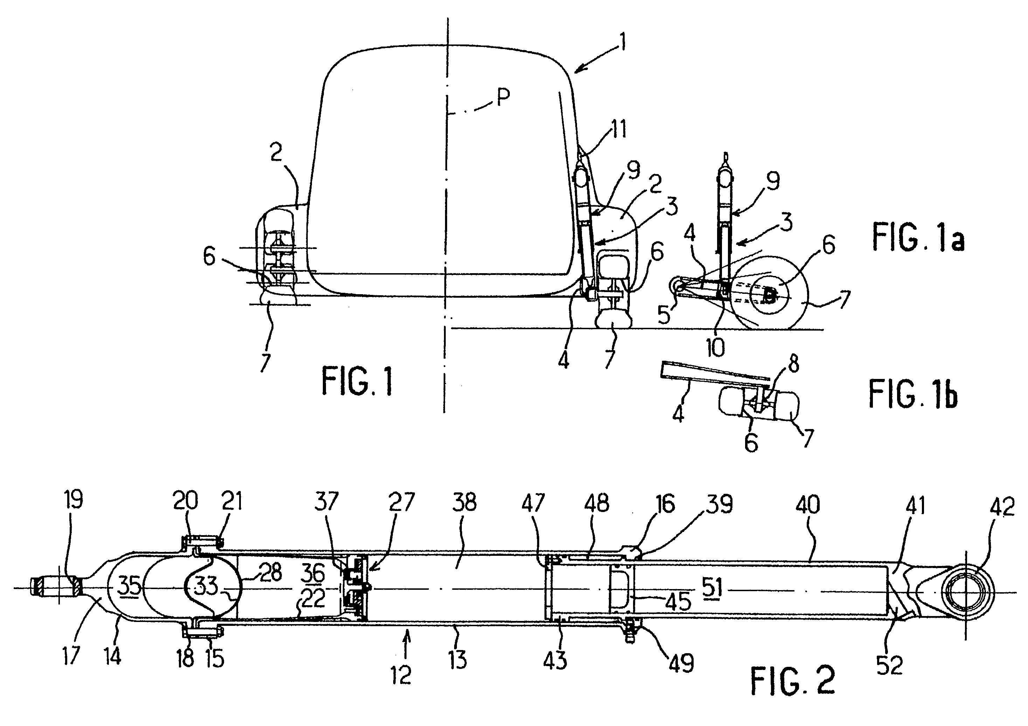

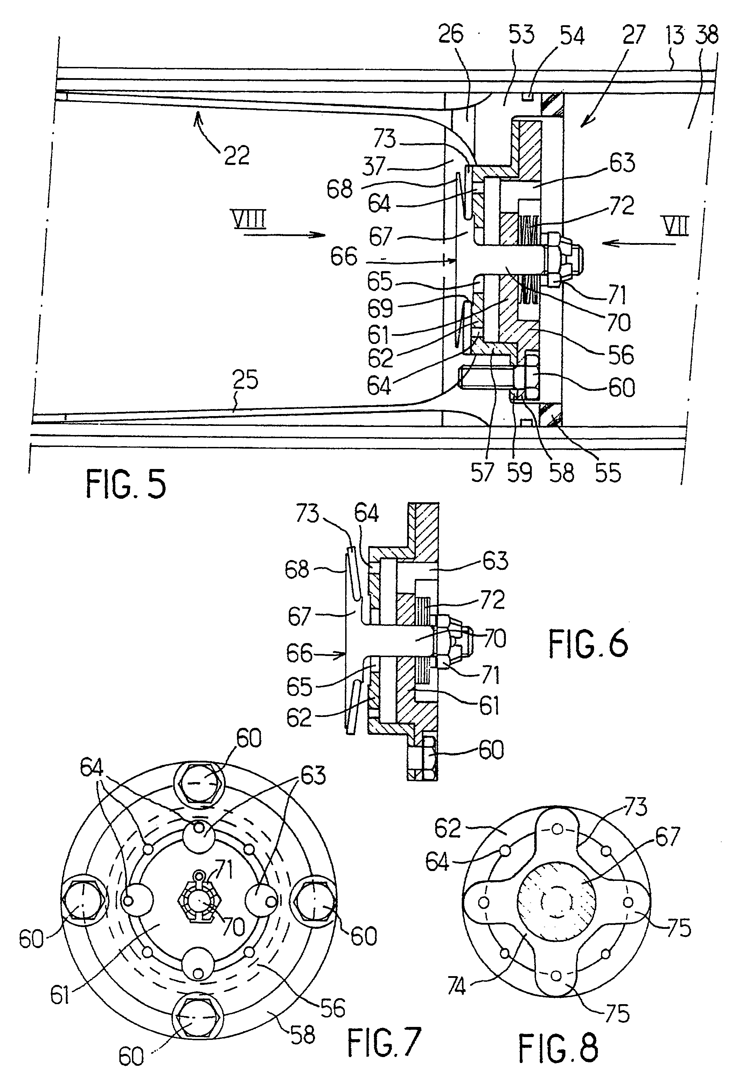

Dans d'autres réalisations (figures 2, 5 et 6), la chambre de gaz à haute pression est disposée dans le cylindre, entre les deux chambres d'extrémité de ce dernier. Dans ce cas, le fond mobile peut former le fond de la chambre d'extrémité supérieure, et la chambre de gaz à haute pression est délimitée entre le fond mobile et une cloison transversale fixe du cylindre, qui constitue le fond de la chambre d'extrémité inférieure (figure 2). De plus, un piston séparateur est avantageusement monté coulissant avec étanchéité à l'intérieur de la tige de vérin pour séparer la chambre de descente, ainsi délimitée dans la tige de vérin, du volume adjacent de liquide hydraulique retenu dans la chambre d'extrémité inférieure du cylindre et en communication avec le liquide hydraulique de la chambre d'extrémité supérieure par une tige creuse qui est portée par la cloison transversale, traverse la chambre de gaz à haute pression et autour de laquelle le fond mobile est monté coulissant avec étanchéité (figure 5). Enfin, il est possible que le fond de la chambre d'extrémité supérieure soit formé par la cloison transversale fixe du cylindre, tandis que le fond de la chambre d'extrémité inférieure est formé par le fond mobile, séparant la chambre de gaz à haute pression, logée entre le fond mobile et la cloison fixe, du volume de liquide hydraulique contenu dans la chambre d'extrémité inférieure et en communication avec le liquide de la chambre d'extrémité supérieure par la tige creuse portée par la cloison fixe (figure 6).

Dans ces différentes réalisations, un piston de rétraction est monté coulissant avec étanchéité dans la chambre d'extrémité supérieure et autour de la partie de la tige d'amortisseur qui est engagée dans le cylindre, et ce piston de rétraction délimite une chambre de rétraction qui, lorsqu'elle est alimentée en liquide hydraulique sous pression, commande la rétraction de la tige d'amortisseur dans le cylindre par le piston de rétraction. De même, la rétraction de la tige de vérin dans le cylindre peut être assurée par un autre piston de rétraction, monté coulissant avec étanchéité dans la chambre d'extrémité inférieure et autour de la partie de la tige de vérin qui est engagée dans le cylindre de façon à délimiter la chambre de rétraction.

Le brevet français 2 493 444 concerne des perfectionnements apportés à la partie amortisseur de dispositifs tels que les amortisseurs-vérins faisant l'objet des brevets précités. Ces perfectionnements consistent essentiellement en un piston séparateur supplémentaire, monté coulissant avec étanchéité à l'intérieur de la tige d'amortisseur et séparant la chambre de gaz à basse pression, en partie basse dans cette tige, d'un volume de liquide hydraulique, en partie haute dans cette tige, et un bloc distributeur hydraulique, extérieur à l'amortisseur, est en communication avec la partie haute de la tige d'amortisseur, pour faire varier le volume de liquide hydraulique qu'elle contient, le piston séparateur coulissant avec étanchéité autour d'une tige axiale creuse, interne à la tige d'amortisseur, et faisant communiquer la chambre de gaz à basse pression avec une canalisation de raccordement à une source de gaz sous pression. De plus, le bloc distributeur hydraulique commande la vidange du liquide hydraulique de la partie haute interne à la tige d'amortisseur lorsque celle-ci est sollicitée par le piston de rétraction correspondant, pour être enfoncée dans le cylindre.

Enfin, le brevet français 2 554 415 propose un amortisseur-vérin pour atterrisseur qui autorise le surbaissement sous l'effet du poids propre de l'aérodyne, et le retour en position "atterrisseur sorti" au sol, mais qui ne remplit pas la fonction de vérin assurant le relevage ou la rétraction de l'atterrisseur en vol. En fait, ce brevet concerne spécifiquement un atterrisseur avant et orientable, équipé d'un amortisseur-vérin à une seule chambre de gaz à basse pression et qui est monté dans un caisson pivotant sur la structure de l'aérodyne, pour permettre la rentrée ou la sortie de l'atterrisseur avant par pivotement autour d'un axe transversal et fixe de la structure, et non par diminution de l'encombrement axial de l'amortisseur-vérin.

L'amortisseur-vérin comprend une tige, formée de deux tubes coaxiaux, de section différente, reliés par un fond à l'une de leurs extrémités, un cylindre à fond fermé, contenant du liquide hydraulique et coulissant entre les deux tubes, et dont l'extrémité ouverte engagée entre les deux tubes forme un piston annulaire, l'amortisseur-vérin comprenant également un dispositif de laminage porté par l'extrémité du tube interne engagée dans le cylindre, une chambre de gaz à basse pression, contenue dans le tube interne, entre une chambre de liquide hydraulique en communication avec celui contenu dans le cylindre au travers des orifices de laminage, et un piston séparateur coulissant avec étanchéité dans le tube interne pour séparer la chambre de gaz à basse pression d'une chambre de liquide hydraulique reliée à un bloc hydraulique. La tige est montée coulissante axialement dans un caisson qui délimite avec le tube externe une chambre de vérin, normalement remplie de liquide hydraulique, et qui est vidangée vers le bloc hydraulique, au surbaissement sous l'effet du poids de l'aérodyne, de sorte qu'en position surbaissée, la partie supérieure de la tige dépasse au-dessus du caisson, le retour en position "atterrisseur sorti" sous charge statique, au sol, étant assuré par le remplissage de cette chambre.

Le dépassement de la partie supérieure de la tige au-dessus du caisson, en position surbaissée, est une configuration qui n'est pas admissible sur des atterrisseurs principaux, notamment pour hélicoptère, du type à coulissement direct, sur lequel l'amortisseur-vérin est logé dans la jambe d'atterrisseur, comme du type à balancier, sur lequel l'amortisseur-vérin est logé dans une contre-fiche élastique de manoeuvre, lorsque la jambe ou la contre-fiche respectivement doit être inclinée de l'extérieur vers l'intérieur et de bas en haut par rapport au plan vertical, longitudinal et médian de l'aérodyne.

Toutes les réalisations présentées dans les brevets précités ont pour inconvénients communs que leur structure et leur mode de fonctionnement sont complexes. En particulier elles comportent un nombre relativement important de pistons et d'autres organes coulissant avec étanchéité, et faisant office de pistons, ainsi qu'un grand nombre de joints d'étanchéité dynamiques, et, d'une manière générale, un grand nombre de composants mécaniques. Il en résulte que les coûts de fabrication, de montage et de maintenance sont élevés, et que les amortisseurs-vérins obtenus sont lourds.

Le problème à la base de l'invention consiste à simplifier, dans une mesure importante, la structure et le principe de fonctionnement d'un amortisseur-vérin, destiné à l'équipement des trains d'atterrissage d'aérodynes, en particulier à voilure tournante, et remplissant à la fois les fonctions d'amortisseur à haute absorption d'énergie, et de vérin de rentrée et de sortie du train, permettant le surbaissement et/ou la surélévation de l'aérodyne, et, éventuellement, l'atterrissage en position vérin rentré.

A cet effet, l'amortisseur-vérin selon l'invention, du type chargé en compression et comprenant :
- un corps cylindrique, dont une extrémité axiale est ouverte,
- une tige cylindrique creuse, dont une extrémité axiale est ouverte et dont l'autre extrémité axiale est fermée par un fond, destiné à être relié à un organe non suspendu du train d'atterrissage, cette tige étant engagée par sa partie d'extrémité axiale ouverte dans l'extrémité axiale ouverte du corps, et montée coulissante avec étanchéité dans ce dernier,
- un piston annulaire, monté coulissant avec étanchéité à l'intérieur du corps cylindrique et solidaire en déplacement dans ce dernier de la partie de tige interne au corps, en délimitant entre le corps et la tige une chambre annulaire de rentrée, que le piston annulaire isole d'une chambre de fluide hydraulique contenu dans le corps, et telle que l'alimentation en fluide hydraulique sous pression de la chambre annulaire de rentrée commande la rentrée de la tige dans le corps, tandis que sa vidange autorise la sortie de la tige vers l'extérieur du corps,
- un piston séparateur, monté coulissant avec étanchéité et entre deux butées à l'intérieur de la tige dans laquelle il délimite une chambre de sortie que le piston séparateur isole du fluide hydraulique contenu dans le corps, et dont l'alimentation en fluide hydraulique sous pression commande la sortie de la tige hors du corps, tandis que sa vidange autorise la rentrée de la tige dans le corps,
- une chambre de gaz à basse pression, comprimée par un volume adjacent de fluide hydraulique lorsque le fluide hydraulique contenu dans le corps est comprimé par le piston annulaire et le piston séparateur, sous l'effet de charges en compression s'exerçant sur l'amortisseur-vérin et faisant rentrer la tige dans le corps,

- un dispositif de laminage, logé dans le corps et freinant les déplacements de la tige dans le corps par laminage du fluide hydraulique contenu dans ce dernier, et

- une chambre de gaz à haute pression, également logée dans le corps dans lequel elle est délimitée entre une paroi fixe du corps et un organe séparateur qui l'isole du fluide hydraulique et de la chambre de gaz à basse pression, et qui est comprimée dès que l'amortisseur-vérin est sollicité en compression par un effort supérieur à un seuil correspondant à une pression du gaz de la chambre à basse pression égale à la pression de gonflage de la chambre de gaz à haute pression, se caractérise en ce que la chambre de gaz à basse pression est logée dans le corps, entre le dispositif de laminage et la chambre de gaz à haute pression, dont elle n'est séparée que par l'organe séparateur, comprenant une membrane souple qui est en appui, tant que la pression du gaz de la chambre à basse pression n'est pas supérieure à la pression de gonflage de la chambre à haute pression, contre un support rigide et perforé, solidaire du cylindre, et permettant la transmission de pression de la chambre à basse pression vers la chambre à haute pression, par l'intermédiaire de la membrane, en limitant de façon absolue la déformation de la membrane vers la chambre à basse pression et le dispositif de laminage.

Dans une telle réalisation, comme, d'une part, le corps cylindrique fait simultanément office de corps de vérin et de corps d'amortisseur, et que la tige, le piston annulaire et le piston séparateur font simultanément office de tige et de piston d'amortisseur, et, d'autre part, comme la chambre à haute pression, la chambre à basse pression, la membrane étanche au gaz de ces chambres, le support de la membrane et enfin le dispositif de laminage occupent des positions relatives qui se prêtent à leur agencement en un module de compression pneumatique, il en résulte que l'amortisseur-vérin selon l'invention présente une structure simplifiée, comportant un petit nombre d'organes, et permettant de simplifier et d'alléger notablement tous les constituants mécaniques et hydrauliques de l'amortisseur-vérin, ce qui conduit par conséquent à une réduction très significative du poids et du prix de revient de ce dernier.

Dans un mode avantageux de réalisation sur le plan de la distribution des pressions et donc des contraintes dans la membrane et son support, le support rigide perforé est une cloison interne sensiblement transversale au corps et qui comporte un fond hémisphérique, dont la concavité est tournée vers la chambre à haute pression, et qui est percé d'une pluralité d'orifices de passage. De plus, la membrane souple est avantageusement réalisée en une matière caoutchouteuse, élastiquement déformable, et elle comporte une partie centrale qui, en position de repos de l'amortisseur-vérin, présente une forme hémisphérique en appui contre la face concave du fond hémisphérique de la cloison rigide perforée.

Dans une forme avantageusement simple de réalisation, la paroi fixe du corps qui coopère avec la membrane pour délimiter la chambre à haute pression est formée par un fond fixe fermant l'extrémité axiale du corps du côté opposé à l'extrémité ouverte dans laquelle est engagée la tige.

Dans ce cas, afin de favoriser la réalisation modulaire de l'amortisseur-vérin, le corps est avantageusement constitué par l'assemblage axial d'un manchon cylindrique et d'un embout d'extrémité qui présente un évidement interne, logeant la chambre de gaz à haute pression, fermé du côté opposé au manchon par un fond à paroi interne hémisphérique et concave, et s'ouvrant dans le manchon par une extrémité de l'embout qui présente une bride radiale externe par laquelle l'embout est fixé à une bride radiale externe de l'extrémité en regard du manchon.

Dans un exemple de réalisation économique et simple, l'organe séparateur est uniquement constitué par la membrane, qui présente une partie périphérique par laquelle elle est fixée de manière étanche au corps, et, lorsque ce dernier est constitué par l'assemblage du manchon cylindrique et de l'embout d'extrémité précités, la partie périphérique par laquelle la membrane est fixée au corps est avantageusement un bourrelet annulaire qui est pincé entre les brides de fixation du manchon à l'embout.

De même, le support rigide perforé présente un bord périphérique par lequel il est directement fixé au corps, et, dans l'exemple avantageux mentionné ci-dessus, ce bord périphérique du support agencé en cloison rigide perforée à fond hémisphérique est un collet annulaire pincé entre les brides de fixation du manchon à l'embout et en saillie radiale vers l'extérieur d'un tronc de cylindre engagé dans le manchon et raccordé au fond hémisphérique. Une telle structure de support rigide perforé, comportant un collet annulaire, un tronc de cylindre et un fond hémisphérique, se prête favorablement à une réalisation métallique ou en matériau composite.

Avantageusement de plus, le dispositif de laminage est positionné dans le corps par un absorbeur d'énergie par déformation plastique, qui n'est sollicité qu'après la venue de la tige en contact avec le dispositif de laminage, ce qui donne à l'amortisseur-vérin une capacité supplémentaire de dissipation d'énergie en cas d'atterrissage en catastrophe, en prolongeant la course d'amortissement et par la sollicitation et la déformation de l'absorbeur d'énergie. Dans une forme pratique de réalisation, ce dernier est de préférence un organe tubulaire, qui est engagé dans le manchon cylindrique du corps, et qui est solidaire du dispositif de laminage par une extrémité axiale située du côté de la tige, alors que son extrémité axiale située du côté de l'embout présente une bride radiale externe qui est serrée entre les brides de fixation du manchon et de l'embout, afin de fixer la position de cet absorbeur d'énergie, et donc du dispositif de laminage, par rapport au corps de l'amortisseur-vérin.

Comme cela est déjà connu dans les amortisseurs-vérins de l'état de la technique, le dispositif de laminage comprend avantageusement un ensemble à clapet et orifice de laminage présentant une section de passage sélectivement variable en fonction de la pression du fluide hydraulique et/ou de la vitesse d'enfoncement de la tige dans le corps, et du sens de passage du fluide hydraulique au travers de cet ensemble de laminage.

Afin de faciliter le montage de ce dernier dans le corps, le dispositif de laminage comporte de préférence un corps annulaire de positionnement de cet ensemble à clapet et orifice de laminage dans le corps cylindrique, et formant butée limitant l'enfoncement de la tige dans le corps cylindrique, en conditions normales d'utilisation de l'amortisseur-vérin, le corps annulaire étant disposé transversalement dans le corps cylindrique et monté avec étanchéité par sa paroi latérale externe dans ce dernier, et l'ensemble à clapet et orifice de laminage étant monté sensiblement à l'intérieur du corps annulaire.

Dans une forme préférée de réalisation, convenant aux faibles vitesses d'impact à l'atterrissage et permettant un freinage des mouvements de sortie de la tige, en particulier après le décollage, lors du retour de l'amortisseur-vérin en position détendue, l'ensemble à clapet et orifice de laminage comprend un premier disque, percé d'une pluralité de petits orifices de laminage, et disposé transversalement en position fixe dans le corps, ainsi qu'un clapet de freinage en détente, disposé du côté du premier disque qui est tourné vers les chambres de gaz, et mobile entre deux positions, dont l'une est une position écartée du disque percé, dans laquelle le clapet de freinage est amené par la compression du fluide hydraulique, éventuellement au-delà d'un premier seuil, résultant de l'enfoncement de la tige dans le corps cylindrique, afin d'autoriser le laminage en compression par les petits orifices du premier disque percé, et dont l'autre position est une position accolée au premier disque, dans laquelle le clapet de freinage est amené par la détente d'au moins une chambre de gaz et obture certains des petits orifices du premier disque afin d'autoriser le laminage en détente par les seuls orifices non obturés du premier disque, et de freiner ainsi les sorties de la tige hors du corps cylindrique.

Mais, de plus, afin que l'ensemble à clapet et orifice de laminage soit également utilisable aux vitesses verticales d'impact élevées, le premier disque est également percé d'au moins un grand orifice, de section de passage très supérieure à celle des petits orifices de laminage, et qui est normalement fermé par l'obturateur d'un clapet de surpression sollicité élastiquement de manière à plaquer l'obturateur contre le premier disque, et déplacé à l'encontre des moyens élastiques qui le sollicitent de manière à écarter l'obturateur du premier disque et à autoriser le passage du fluide hydraulique par le ou les grands orifices, en cas de surpression occassionnée par un enfoncement à vitesse élevée de la tige dans le corps et dépassant un seuil d'actionnement des moyens élastiques.

Dans une forme simple de réalisation, l'obturateur du clapet de surpression est disposé du côté du premier disque qui est tourné vers les chambres de gaz, et il forme simultanément un piston de surpression qui est soumis à la pression du fluide hydraulique passant par le ou les grands orifices et sur lequel s'exerce un effort résultant, antagoniste à l'action des moyens élastiques sollicitant le clapet de surpression dans le sens de la fermeture du ou des grands orifices.

Avantageusement de plus, le clapet de surpression constitue simultanément un support sur lequel le clapet de freinage en détente est monté mobile.

Dans une forme de réalisation avantageusement simple, ce clapet de freinage en détente a la forme d'un anneau circulaire présentant des languettes d'obturation en saillie radiale vers l'extérieur, et destinées chacune à obturer respectivement l'un de ceux des petits orifices de laminage qui sont à obturer par le clapet de freinage en détente. Ce dernier est de plus monté pivotant par son bord radial interne dans une gorge périphérique ouverte radialement vers l'extérieur et ménagée sur le clapet de surpression. Si le premier disque percé présente un unique grand orifice autour duquel les petits orifices de laminage sont répartis régulièrement, le clapet de surpression a alors avantageusement la forme sensiblement d'un champignon, dont le chapeau présente une partie radiale interne, qui forme l'obturateur et le piston de surpression de ce clapet, et qui est séparée par la gorge périphérique dans laquelle le bord radial interne du clapet de freinage en détente est engagé, d'une partie annulaire radiale externe formant une butée d'appui du clapet de freinage en détente, lorsque ce dernier est écarté du premier disque, et le pied du clapet de surpression en forme de champignon s'étend axialement, avec un important jeu radial, au travers du grand orifice du premier disque percé et est monté coulissant au travers d'un second disque, percé d'orifices de laminage de section de passage supérieure à celle des petits orifices du premier disque percé, et axialement espacé du premier disque du côté tourné vers la tige, l'extrémité du pied faisant saillie vers la tige au-delà du second disque et étant filetée, et un écrou est vissé sur cette extrémité filetée du pied et forme une butée, contre laquelle prend appui une extrémité d'un ressort de compression, dont l'autre extrémité prend appui contre le second disque, afin de rappeler le clapet de surpression axialement vers la tige, pour appliquer l'obturateur contre le premier disque percé.

Dans ce cas, et lorsque l'ensemble à clapet et orifice de laminage est monté dans un corps annulaire du dispositif de laminage, le premier et le second disque percé sont les disques centraux de deux organes en forme d'assiette serrés l'un contre l'autre par leurs parties périphériques qui sont retenues par des organes de fixation sur ce corps annulaire du dispositif de laminage.

L'invention a également pour objet une contre-fiche élastique et de manoeuvre, destinée à l'équipement d'un atterrisseur d'aérodyne, et qui se caractérise en ce qu'elle comprend un amortisseur-vérin selon l'invention, dont le fond de la tige est solidaire d'un embout rotulé d'articulation sur un organe non suspendu de l'atterrisseur correspondant, tel qu'un organe porte-roue, et dont le fond du corps cylindrique de l'amortisseur-vérin est solidaire d'un embout rotulé d'articulation sur un organe structural suspendu et lié à la structure de l'aérodyne.

Enfin, l'invention a également pour objet un train d'atterrissage pour aérodyne, en particulier un atterrisseur principal à balancier pour hélicoptère, comprenant :

une jambe d'atterrisseur, montée oscillante autour d'un axe de fusée solidaire de la structure de l'aérodyne,

au moins une roue à pneumatique supportée par la jambe, et

une contre-fiche de manoeuvre et de contreventement de la jambe, ladite contre-fiche étant articulée par une extrémité sur un organe structural lié à la structure de l'aérodyne et par l'autre extrémité sur la jambe, entre la ou les roues et le point de pivotement de cette jambe sur une fusée solidaire de la structure de l'aérodyne. et il se caractérise en ce que la contre-fiche de manoeuvre et de contreventement est une contre-fiche selon l'invention et telle que présentée ci-dessus.

La présente invention sera mieux comprise et d'autres avantages et caractéristiques ressortiront à la lecture de la description donnée ci-dessous d'un exemple préféré de réalisation, décrit en référence aux dessins annexés sur lesquels :

la figure 1 est une vue schématique, en coupe par un plan transversal du fuselage sensiblement au niveau des atterrisseurs principaux, d'un hélicoptère dont les atterrisseurs principaux sont chacun équipés d'une contre-fiche comportant un amortisseur-vérin,

la figure 1a est une vue schématique, en partie en coupe et en partie en élévation latérale, d'un atterrisseur principal de l'hélicoptère de la figure 1,

la figure 1b est une vue schématique en coupe de la jambe et de la roue de l'atterrisseur de la figure 1a,

la figure 2 est une vue en coupe axiale de l'amortisseur-vérin de contre-fiche, en position détendue, de l'atterrisseur des figures précédentes,

la figure 3 est une vue partielle en coupe à plus grande échelle des extrémités de la tige et d'une extrémité correspondante du corps de l'amortisseur-vérin de la figure 2,

la figure 4 est une vue partielle en coupe à plus grande échelle de l'autre extrémité du corps de l'amortisseur-vérin,

la figure 5 est une vue partielle en coupe axiale du dispositif de laminage de l'amortisseur-vérin,

la figure 6 est une vue partielle en coupe axiale du dispositif de la figure 5, dans une autre position de fonctionnement,

la figure 7 est une vue dans la direction de la flèche VII du dispositif de laminage de la figure 5,

la figure 8 est une vue selon la flèche VIII du dispositif de laminage de la figure 5, et

les figures 9 à 13 sont des vues analogues à la figure 2 et représentant l'amortisseur-vérin dans différentes positions qu'il occupe, respectivement, en cas d'atterrissage "dur", en position sous charge statique, en position surbaissée au sol ou train rentré en vol, dans une position transitoire à la suite d'un atterrissage en catastrophe (configuration de "crash"), et enfin en position surélevée au sol.

Sur la figure 1, on a indiqué en 1 la silhouette générale en coupe transversale du fuselage d'un hélicoptère comportant deux carénages latéraux et inférieurs 2 destinés chacun à loger presque complètement l'un des atterrisseurs principaux 3 du train d'atterrissage. Chaque atterrisseur 3 comporte, comme représenté également sur les figures 1a et 1b, une jambe 4 métallique ou en matériau composite, montée en balancier, c'est-à-dire oscillante par son extrémité avant autour d'une fusée structurale 5 solidaire de la structure du fuselage 1 et d'axe horizontal et transversal (perpendiculaire au plan vertical, longitudinal et médian P du fuselage).

Par son extrémité arrière, la jambe 4 supporte une roue 6 à pneumatique 7 et à frein de roue hydraulique 8. La jambe 4 ainsi équipée et montée est contreventée par une contre-fiche élastique 9, d'amortissement et de manoeuvre, qui est articulée par son extrémité inférieure dans une chape 10 solidaire de la jambe 4 sensiblement en son milieu, et par son extrémité supérieure sur une attache structurale en un point 11 du fuselage 1, de sorte que la contre-fiche 9 est légèrement inclinée de l'intérieur vers l'extérieur (par rapport au plan P) et de haut en bas, dans un plan sensiblement vertical et transversal.

Cette contre-fiche 9 comprend un amortisseur oléopneumatique à deux chambres de gaz à haute absorption d'énergie à l'atterrissage, et un vérin hydraulique de manoeuvre, commandant la descente et le relevage de la jambe 4, de sorte que la roue 6 peut être sortie du carénage 2 pour l'atterrissage et escamotée presque complètement dans ce carénage 2 en vol. De plus, cette contre-fiche 9 est agencée en amortisseur-vérin intégré, permettant en outre de surbaisser le fuselage 1 de l'hélicoptère en commandant, à partir de la position atterrisseur sorti sous charge statique au sol, représentée sur la demi-vue de droite de la figure 1, une rétraction de la jambe 4 et de la roue 6 dans le carénage 2 de sorte que seul le pneumatique 7 correspondant soit saillant sous le carénage 2 et le plancher de l'hélicoptère, comme représenté sur la demi-vue de gauche de la figure 1.

Cette contrefiche 9 permet également de surélever le fuselage 1 de l'hélicoptère en commandant à partir de la position atterrisseur sorti sous charge statique au sol, représentée sur la demi-vue de droite de la figure 1, un allongement supplémentaire de la contre-fiche 9 et par conséquent une position angulaire plus basse de la jambe 4, ce qui provoque la surélévation du fuselage par rapport au sol.

La contre-fiche 9 agencée en amortisseur-vérin est décrite ci-dessous en référence aux figures 2 à 4, et elle comporte un dispositif de laminage dont la structure et le fonctionnement seront décrits en référence aux figures 5 à 8, le fonctionnement de la contre-fiche 9 étant décrit en référence aux figures 2 et 9 à 13.

En référence aux figures 2 à 4, l'amortisseur-vérin comprend un corps cylindrique 12, constitué par l'assemblage d'un manchon cylindrique 13 et d'un embout d'extrémité 14. Le manchon 13 est constitué, pour assurer la tenue en traction, d'une chemise en alliage léger avec un revêtement intérieur dur, et intégrant, à son extrémité de gauche sur la figure 2, une bride radiale externe de liaison 15, et, à son extrémité de droite, un palier 16 en saillie radiale vers l'intérieur, et, pour assurer la tenue en pression, la chemise est entourée d'une frette en matériau composite réalisée par bobinage circonférentiel de fibres par exemple aramides, telles que les fibres commercialisées sous le nom de KEVLAR, agglomérées par une résine synthétique polymérisée.

L'embout 14 est un tronc de cylindre fermé à une extrémité par un fond 17 à face interne hémisphérique à concavité tournée vers l'intérieur de l'évidement délimité dans l'embout 14, dont l'autre extrémité est ouverte et entourée d'une bride radiale externe 18 de liaison, par des ensembles vis 20 - écrou 21, à la bride 15 du manchon 13, pour fermer ce dernier de manière étanche, et le fond 17 de l'embout 14 se prolonge par une chape à rotule 19, pour l'articulation de la contre-fiche 9 au point de fixation 11 sur le fuselage 1.

Entre les brides 15 et 18 de fixation de l'embout 14 sur le manchon 13, est serrée une bride radiale externe 23 d'un absorbeur d'énergie par déformation plastique 22, en forme de tube cylindro-conique engagé axialement dans le manchon 13 (voir figure 4). Ce tube 22 comporte un tronçon cylindrique 24, adjacent à la bride 23, et engagé sans jeu radial notable dans le manchon 13, et un tronçon légèrement tronconique 25, qui converge en direction du palier 16, et dont l'extrémité est solidaire d'un dispositif de laminage 27, ainsi positionné axialement dans le manchon 13 et décrit ci-dessous en référence aux figures 5 à 8.

Dans le tronçon cylindrique 24 du tube 22 est engagée, sans jeu radial notable, la partie cylindrique 29 d'un support 28, métallique ou en matériau composite, à fond hémisphérique 30 percé de nombreux petits trous 31 et présentant sa convexité vers l'intérieur du manchon 13 et vers le dispositif de laminage 27. Ce support 28 est retenu axialement en position par un collet 32 qui est rabattu radialement vers l'extérieur à l'extrémité de la partie cylindrique 29 du côté opposé au fond perforé 30, et qui est pincé entre la bride 23 du tube 22 et le bourrelet périphérique et surépaissi 34 d'une membrane étanche 33, en élastomère souple et élastiquement déformable, qui forme une cloison transversale, étanche et interne au corps 12 en étant retenue en position par son bourrelet périphérique 34 pincé de manière étanche entre les brides 15 et 18 (voir figure 4).

La membrane 33 délimite avec la paroi interne de l'embout 14 une chambre de gaz à haute pression 35, gonflée à l'azote, sous une pression de 10 MPa dans l'exemple choisi, et isolée par la membrane 33 d'une chambre de gaz à basse pression adjacente 36, gonflée à l'azote sous une pression de 0,5 MPa, dans l'exemple choisi et délimitée dans le manchon 13 entre la membrane 33 et un volume 37 d'huile hydraulique qui baigne le dispositif de laminage 27.

En position de repos de l'amortisseur-vérin (figure 2), du fait de la pression différentielle s'exerçant sur la membrane 33, celle-ci est appliquée contre le support 28 (position représentée en trait plein sur la figure 4), qui limite de façon absolue le déplacement et l'extension de la membrane 33 vers le dispositif de laminage 27, de sorte que la partie centrale de la membrane 33 prend également une forme hémisphérique.

L'amortisseur-vérin comprend également une tige cylindrique creuse 40, ouverte axialement à une extrémité par laquelle elle se trouve engagée et retenue dans le manchon 13, et dont l'autre extrémité axiale est fermée par un fond 41, d'une seule pièce avec un embout à chape rotulée 42, pour l'articulation de la contre-fiche 9 sur la chape 10 de la jambe 4 de l'atterrisseur. La tige 40 est montée axialement coulissante avec étanchéité et guidée dans le palier 16 équipé d'un joint d'étanchéité torique 39 (voir figure 3) et dans le manchon 13 grâce à un piston annulaire 43, solidaire de l'extrémité ouverte de la tige 40, et en saillie radialement vers l'extérieur de celle-ci, ce piston annulaire 43 étant équipé de deux joints d'étanchéité toriques 44.

Un piston séparateur 45, également équipé de deux joints d'étanchéité toriques 46, est monté coulissant axialement avec étanchéité dans la tige 40, entre deux butées axiales dont l'une est le fond 41 de la tige et l'autre une butée annulaire 47 vissée contre le piston annulaire 43 et saillant radialement vers l'intérieur de l'alésage de la tige 40 (voir figure 3). Le piston annulaire 43 délimite, entre le manchon 13 et la tige 40 une chambre annulaire hydraulique 48, qui est isolée de la chambre adjacente 38 d'huile hydraulique s'étendant dans le manchon 13 jusqu'au dispositif de laminage 17, et en communication au travers de ce dernier avec le volume d'huile 37. La chambre 48 peut être mise en communication avec un circuit hydraulique externe par le raccord hydraulique 49 fixé dans un perçage radial ménagé dans le palier 16 et débouchant dans la chambre annulaire 48, dont le volume minimum est déterminé par la position axiale sur la tige 40 d'une butée radiale externe 50, qui limite la sortie de la tige 40 hors du corps 12.

De même, une chambre hydraulique 51 est délimitée dans la tige 40 entre son fond 41 et le piston séparateur 45, qui isole cette chambre 51 de l'huile hydraulique de la chambre 38 du corps 12, et cette chambre 51 peut être mise en communication avec un circuit hydraulique externe par un raccord fixé dans le perçage 52 ménagé dans le fond 41 et débouchant dans la chambre 51.

Les sorties ou entrées des chambres 48 et 51, en 49 et 52, sont raccordées, par l'intermédiaire de clapets (non représentés) de verrouillage hydraulique à ouverture commandée par électro-vanne, à un bloc hydraulique distributeur qui assure l'alimentation des chambres en huile hydrau lique sous pression ou autorise leur vidange vers une bâche du circuit hydraulique de l'hélicoptère. Ainsi, la chambre annulaire 48 constitue une chambre de rétraction ou de relevage de l'atterrisseur, qui commande la rentrée de la tige 40 dans le corps 12, en comprimant la chambre basse pression 36 et, éventuellement, la chambre haute pression 35, par transfert d'huile de la chambre 38 vers le volume 37 au travers du dispositif de laminage 27, sauf si, simultanément, la chambre 51 est mise en communication avec la bâche et est vidangée par déplacement du piston séparateur 45 vers le fond 41 de la tige 40, sous la poussée de l'huile de la chambre 38 qui est chassée par l'enfoncement de la tige 40 dans le corps 12 et se loge dans la tige 40. Inversement, la chambre 51 constitue une chambre de descente ou de sortie de l'atterrisseur, qui commande la sortie de la tige 40 hors du corps 12 lorsqu'elle est alimentée en huile sous pression, ce qui repousse le piston 45 contre la butée 47 en comprimant l'huile de la chambre 38 et, si simultanément la chambre 48 est mise en communication avec la bâche, ce qui repousse la tige 40 hors du corps 12 en vidangeant la chambre 48 jusqu'à la venue de la butée 50 en contact contre le palier 16.

Le dispositif de laminage 27 (voir figures 5 à 8) comprend un corps annulaire 53 en alliage léger et un ensemble à clapet et orifice de laminage logé dans le corps annulaire 53 et ainsi positionné radialement dans le manchon 13. Le corps 53 est d'une seule pièce avec l'extrémité du tronçon tronconique 25 du tube 22 et est monté avec étanchéité dans le manchon 13 par sa face latérale équipée d'un joint d'étanchéité 54. Sur sa face tournée vers la tige 40, le corps annulaire 53 porte une bague en élastomère 55 contre laquelle la tige 40 vient en butée dans certaines configurations de l'amortisseur-vérin qui sont précisées ci-dessous. L'ensemble de laminage comprend deux éléments transversaux 56 et 57, en forme d'assiettes qui sont emboîtées l'une dans l'autre et appliquées l'une contre l'autre par leurs parties périphériques 58 et 59, vissées par quatre vis 60 contre le fond annulaire d'un évidement du corps 53 s'ouvrant vers la tige 40. Les deux éléments 56 et 57 sont dimensionnés de sorte que leurs disques centraux et plats 61 et 62 sont axialement espacés l'un de l'autre. Le disque 61, du côté de la chambre 38, est percé de quatre trous de laminage 63 de grand diamètre, répartis sur sa périphérie, tandis que le disque 62, du côté des chambres de gaz, est percé de huit trous de laminage 64 de petit diamètre, répartis sur sa périphérie et dont quatre d'entre eux sont en regard des quatre trous 63 du disque 61. De plus, le disque 62 est percé d'un trou central 65 de diamètre supérieur à celui des grands trous 63. L'ensemble de laminage comprend également un clapet de surpression 66, en forme de champignon, dont le chapeau, situé du côté des chambres de gaz, présente une partie radiale interne 67, formant piston de surpression et obturateur du trou central 65, et une partie annulaire radiale externe 68, séparée de la partie 67 par une gorge annulaire 69, s'ouvrant radialement vers l'extérieur. Le pied cylindrique 70 du clapet 66 traverse axialement avec un jeu radial important le trou 65 et coulisse au travers du disque 61, et l'extrémité de la portion du pied 70 s'étendant au-delà du disque 61 est filetée. Un écrou 71, vissé et goupillé sur cette extrémité filetée, forme une butée repoussée vers la chambre 38 par un ressort de compression constitué par un empilage de rondelles élastiques coniques 72 engagé autour du pied 70, et prenant appui contre le disque 61, de sorte que le clapet 66 est élastiquement tiré axialement vers la chambre 38 jusqu'en position de fermeture du trou 65 par l'obturateur 67. Enfin, un clapet de freinage en détente 73 est monté sur le clapet 66. Ce clapet 73, dont la forme est clairement représentée sur la figure 8, est un clapet à partie centrale annulaire 74 engagée et pivotant par son bord radial interne dans la gorge 69 du clapet en forme de champignon 66, et le clapet 73 présente quatre languettes radiales externes et arrondies 75, qui s'étendent entre la partie radiale externe 68 du clapet 66 et le disque 62, de sorte que chacune forme un obturateur mobile pour l'un des petits trous 64 du disque 62. En position normale, représentée sur la figure 5, les quatre languettes 75 obturent chacune le petit trou 64 correspondant, et l'obturateur 67 du clapet 66 ferme le grand trou 65. Pour des faibles compression de l'huile de la chambre 38, correspondant à de faibles vitesses d'enfoncement de la tige 40 dans le corps 12, l'huile passe de la chambre 38 au volume 37 par les trous 63 et est laminée dans les quatre trous 64 non obturés, et elle comprime la chambre basse pression 36. La détente de cette dernière rappelant élastiquement la tige 40 vers sa position d'équilibre dans le corps 12, se fait ensuite par passage de l'huile du volume 37 vers la chambre 38, et laminage dans les quatre mêmes trous 64 non obturés. Pour des vitesses moyennes et normales d'enfoncement de la tige 40 dans le corps 12, la pression de l'huile comprimée de la chambre 38 qui s'exerce par les trous 64 sur les languettes 75 du clapet 73 est suffisante pour écarter les languettes 75 et faire pivoter le clapet 73 dans la gorge 69 jusqu'à la venue en butée du clapet 73 contre la partie externe 68 du clapet 66. Le laminage de l'huile est alors assuré de la chambre 38 vers le volume 37 par les huit petits trous 64 du disque 62. Après la phase de compression d'au moins une chambre de gaz, sa détente pressurise l'huile du volume 37 qui repousse le clapet 73 contre le disque 62 en position d'obturation de quatre des petits trous 64 par les languettes 75, et le laminage de l'huile du volume 37 vers la chambre 38 se fait uniquement au travers des quatre petits trous 74 non obturés. Il se produit ainsi un freinage de la sortie de la tige 40 sous l'effet de la détente des chambres de gaz. Par contre, en cas d'enfoncement brutal de la tige avec une grande vitesse dans le corps 12, la pression de l'huile fortement comprimée dans la chambre 38 et qui s'exerce dans les petits trous 64 et dans le grand trou 65 du disque 62 est suffisante non seulement pour écarter le clapet de freinage 73 contre sa butée 68 mais également pour écarter l'obturateur 67 du disque 62 et repousser le clapet de surpression 66 axialement vers les chambres de gaz, à l'encontre du rappel élastique de l'empilage des rondelles élastiques 72 qui se trouve comprimé, comme représenté sur la figure 6.

La section de passage de l'huile de la chambre 38 vers le volume 37 est alors maximum et empeche le développement dans la chambre 38 d'une surpression dommageable.

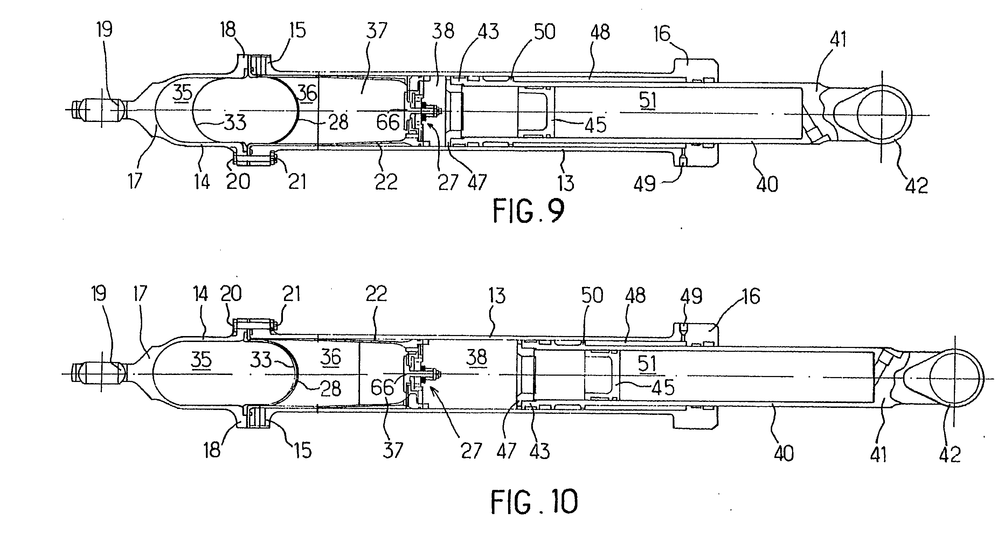

L'amortisseur-vérin, dont la structure vient d'être décrite, et qui se distingue essentiellement des amortisseurs-vérins connus par l'intégration des chambres de gaz haute pression 35 et basse pression 36, dans une chambre unique du corps cylindrique 12 qui est cloisonnée par une membrane étanche 33, en appui sur un support rigide perforé 28, et selon une architecture modulaire non seulement au niveau du module de compression pneumatique ainsi constitué, mais également au niveau du module de laminage 27 monté à l'extrémité du tube 22 d'absorption d'énergie par déformation plastique en cas d'atterrissage en catastrophe, fonctionne de la manière suivante : en ce qui concerne la fonction amortisseur, l'énergie d'impact est absorbée par la compression du gaz inerte (azote) de l'une au moins des chambres de gaz 36 et 35 qui se comportent comme un ressort. A partir de l'état initial, considéré comme étant l'état représenté sur la figure 2, dans lequel l'amortisseur est détendu et l'atterrisseur sorti en vol, état dans lequel la pression d'azote dans la chambre haute pression 35 est de 10 MPa, la pression d'azote dans la chambre basse pression 36 est de 0,5 MPa, et équilibrée avec la pression d'huile de 0,5 MPa dans la chambre 38, alors que la chambre 51 de sortie est remplie de fluide sous pression de façon que le piston séparateur 45 soit dans une position intermédiaire dans le tube 40, et que la chambre de relevage 48 est vidée, et la membrane 33 en appui contre son support 28, l'énergie d'impact à l'atterrissage avec une faible vitesse verticale est absorbée par la chambre basse pression 36 de la position de l'amortisseur-vérin détendu, représenté sur la figure 2, à la position qu'occupera l'amortisseur-vérin comprimé sous la charge statique du poids de l'aérodyne au sol, telle que représentée sur la figure 10, puis par la chambre de gaz haute pression 35 de la position comprimée sous charge statique (figure 10) à une position fortement comprimée, en cas d'atterrissage "dur", comme représenté sur la figure 9. L'enfoncement de la tige 40 dans le corps cylindrique 12 provoque par les pistons 43 et 45 la compression de la chambre 38 dont le liquide est refoulé vers le volume 37 au travers du module de laminage 27 qui freine l'écoulement par laminage au travers des petits orifices 64 du disque 62, ce qui freine la vitesse d'enfoncement de la tige 40 tout en comprimant l'une au moins des chambres de gaz 35 et 36.

Si la pression correspondant à la force d'impact est inférieure à 10 MPa, l'équilibre sera atteint uniquement par une compression de la chambre basse pression 36. La membrane 33 reste alors en appui contre son support 28. Par contre, si la pression correspondant à la force d'impact est supérieure à 10 MPa, on passe par un point de discontinuité sur la courbe de l'effort d'enfoncement de l'amortisseur bichambre en fonction de la course, et cette discontinuité se produit lorsque la pression dans la chambre basse pression 36 atteint 10 MPa, et à cet instant il y a équilibre entre les chambres haute pression 35 et basse pression 36. Ces deux chambres se comportent alors comme une chambre unique qui aurait une pression initiale de 10 MPa et un volume initial égal à la somme du volume résiduel de la chambre basse pression 36 sous une pression de 10 MPa et du volume initial de la chambre haute pression 35. C'est cette nouvelle chambre qui sert de ressort à l'amortisseur, depuis la position d'équilibre, qui correspond à la position sous charge statique au sol, représentée sur la figure 10, à la position de compression maximum en cas d'atterrissage "dur", représentée sur la figure 9, dans laquelle le piston 43 et l'extrémité de la tige 40 sont à proximité du dispositif de laminage 27, la pression dans les chambres de gaz pouvant atteindre plus de 50 MPa. A partir de la pression d'équilibre de 10 MPa entre les deux chambres 36 et 35, pour une légère augmentation de pression, la mem brane 33 décollera de son support 28 et se déplacera plus ou moins, en fonction de la variation de volume, et sans s'allonger vers le fond 17, en adoptant successivement les positions représentées en 33' et 33" sur la figure 4.

A l'issue de la phase de compression, la détente de la chambre 36 ou des chambres 35 et 36 comprimées repousse l'huile du volume 37 vers la chambre 38 au travers du dispositif de laminage 27, qui freine la détente, comme expliqué ci-dessus, par laminage au travers des quatre petits trous 64 non obturés par le clapet 73, ce qui freine la détente et la sortie de la tige 40 hors du corps 12. Cette tige 40 et ses pistons 43 et 45 se stabilisent sur la position de charge statique représentée sur la figure 10, et la membrane 33 se plaque contre son support 28 si la pression est inférieure à 10 MPa dans la chambre 38.

En cas d'impact avec une vitesse verticale élevée (atterrissage dur), la phase d'amortissement se déroule sensiblement comme décrit ci-dessus dans le cas des vitesses d'impact faibles, avec pour seule différence que, sous le coup de l'impact, le clapet de surpression 66 est écarté du disque 62, comme expliqué ci-dessus, à l'encontre du ressort 72, de sorte que le dispositif de laminage 27 offre une augmentation de la section de laminage, ce qui permet d'éviter des contre-pressions trop élevées dans la chambre 38. Pendant la phase de détente, la section de laminage dans le dispositif 27 est identique à celle du laminage en détente précisé ci-dessus pour des vitesses d'impact faibles, à savoir les quatre petits trous 64 non obturés par le clapet 73.

Pendant toutes ces manoeuvres, le piston 45 est en position "moyenne", c'est-à-dire à une distance imposée de la butée 47, car la chambre 51 est remplie de fluide hydraulique, et le clapet en communication avec le perçage 52 est hydrauliquement verrouillé par l'action d'une électro-vanne. De même, le clapet en communication avec l'embout 49 est fermé par une électro-vanne, de sorte qu'il règne dans la chambre annulaire 48 une dépression toujours inférieure ou égale à 0,1 MPa.

A partir de la position sous charge statique (figure 10), le décollage de l'hélicoptère amène l'amortisseur-vérin en position détendue, représentée sur la figure 2, par une détente d'au moins une chambre de gaz freinée par le dispositif de laminage 27 comme déjà expliqué ci-dessus.

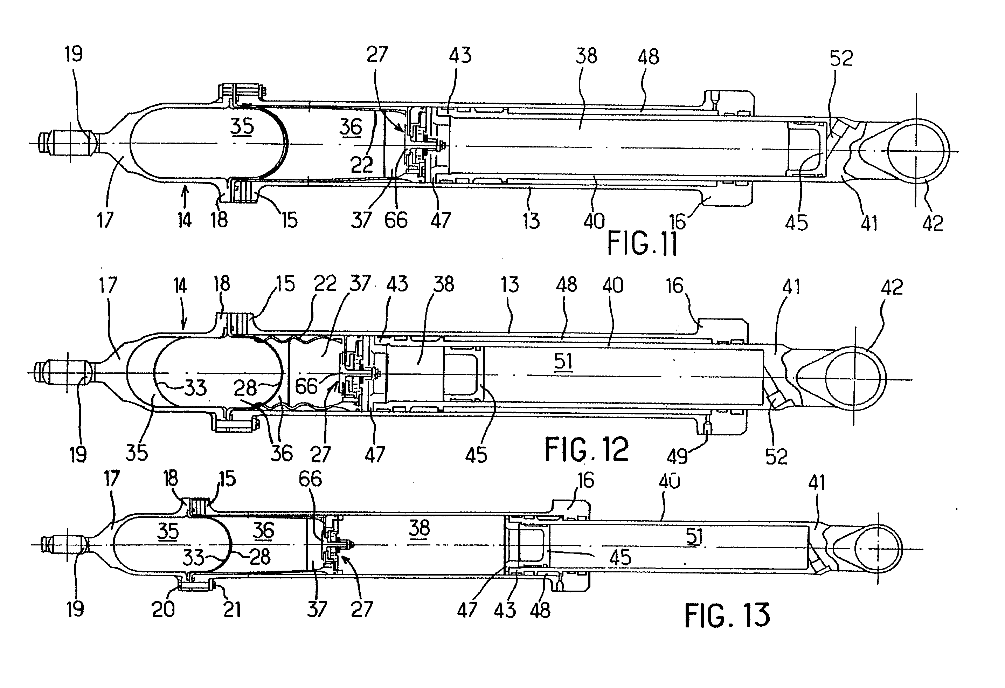

A partir de la position amortisseur détendu et atterrisseur sorti (figure 2), la manoeuvre de relevage ou de rentrée de l'atterrisseur s'effectue de la manière suivante : en début de manoeuvre, la tige 40 est sortie au maximum, le piston 45 est contre la butée 47, la pression dans les chambres 38 et 36 est équilibrée à 0,5 MPa, la pression dans la chambre haute pression 35 est de 10 MPa, la pression dans la chambre 51 est supérieure à 10 MPa, et la pression dans la chambre 48 est sensiblement nulle. Le pilote commande alors la mise en communication de la chambre 51 avec la bâche du circuit hydraulique, et la mise en communication de la chambre 48 avec l'alimentation en huile sous une pression $P_2$. Sous l'action de cette pression, la tige 40 et le piston 43 rentrent dans le corps cylindrique 12, et la pression dans la chambre 38 repousse le piston 45 vers le fond 41 et chasse l'huile de la chambre 51. Un détecteur de position (non représenté) arrête la manoeuvre en position train rentré, représentée sur la figure 11. Dans cette position, la tige 40 et la butée 47 sont pratiquement en contact avec la bague de butée en élastomère 55 du dispositif de laminage 27. Le piston 45 est en butée contre le fond 41 et la pression dans la chambre 51 est nulle, tandis que la pression dans la chambre 48 est la pression de manoeuvre $P_2$, la pression dans la chambre haute pression 35 est toujours de 10 MPa, et la pression dans les chambres 36 et 38 est de 0,75 MPa.

A partir de cette position atterrisseur rentré, la manoeuvre de sortie de l'atterrisseur s'effectue de la façon suivante : le pilote commande la mise en communication de la chambre 51 avec l'alimentation en fluide hydrau lique sous pression et la mise en communication de la chambre annulaire 48 avec le retour à la bâche. En fin de manoeuvre, la tige 40 est sortie au maximum, la chambre 51 est remplie au maximum à une pression supérieure à 0,5 MPa, le piston 45 étant en position moyenne, la chambre annulaire 48 est vidangée au maximum, la pression qui y règne est pratiquement nulle, tandis que la pression dans les chambres 38 et 36 est à nouveau de 0,5 MPa et que la pression dans la chambre haute pression 35 est toujours de 10 MPa. Au cours de cette manoeuvre, le remplissage de la chambre 51 a pour effet d'augmenter la pression dans la chambre 38, de sorte que le fluide hydraulique repousse les pistons 43 et 45 et la tige 40 vers l'extérieur du corps 12. En fin de manoeuvre, la chambre 51 est isolée par la fermeture d'un clapet commandé par une électro-vanne.

Après ces manoeuvres de rentrée et de sortie de l'atterrisseur en vol, on considèrera que l'atterrisseur est à nouveau dans la position sous charge statique de la figure 10, après un atterrissage de l'hélicoptère.

A partir de cette position, si l'on veut surbaisser l'hélicoptère pour le charger dans la soute d'un avion cargo par exemple, on commande la mise en communication de la chambre 51 avec la bâche du circuit hydraulique, alors que la pression régnant dans la chambre annulaire 48 est faible. Le poids de l'hélicoptère assure la rentrée de la tige 40 de la position statique de la figure 10 à la position de la figure 11, le piston 45 étant déplacé de sa position "moyenne" jusqu'au fond 41 de la tige 40, la pression dans la chambre 51 s'annule tandis que les pressions dans les chambres 38, 36 et 35 restent égales aux pressions en position statique de la figure 10, savoir à 10 MPa. En effet, la rentrée de la tige 40 dans le corps 12 s'effectue sans pratiquement faire varier le volume de la chambre 38 du fait que le piston 45 se déplace jusqu'en butée contre le fond 41. Donc la pression varie également très peu. Un capteur de position arrête cette manoeuvre en position train surbaissé, laquelle est tout à fait analogue à la position train rentré en vol, avec la butée 47 et la tige 40 en butée contre la bague en élastomère 55 du dispositif de laminage 27.

Il est à noter qu'on peut obtenir une rentrée partielle de la tige 40 dans le corps 12, ce qui correspond à une position statique intermédiaire, en fermant plus tôt le clapet qui autorise la vidange de la chambre 51.

A partir de la position train surbaissé (figure 11), si l'on veut revenir en position train sorti sous charge statique au sol (figure 10), on procède de la manière suivante : on commande la mise en pression de la chambre 51 et la mise en communication avec la bâche de la chambre 48. Le piston 45 se déplace du fond 41 jusqu'à la position "moyenne" 47, le volume de la chambre 38 tend à diminuer, la pression dans cette chambre augmente à une valeur supérieure à 10 MPa qui correspond à l'équilibre sous charge statique, et cette pression repousse la tige 40 vers l'extérieur du corps 12. Un détecteur de position ferme la mise sous pression de la chambre 51 en fin de manoeuvre. A cet instant, les pressions dans les chambres 35, 36 et 38 sont toujours de 10 MPa, tandis que la pression dans la chambre 51 est supérieure, par exemple de 11 MPa.

A partir de la position sous charge statique de la figure 10, on peut surélever l'hélicoptère comme indiqué figure 13 en augmentant la pression dans la chambre 51 de telle sorte que cette pression repousse le piston 45 contre la butée 47 en comprimant l'azote de la chambre de compression 36 et en déplaçant la tige 40 dans le sens de sa sortie du tube 13. Il en résulte un allongement de la contre-fiche et un relèvement du fuselage par rapport au sol.

Enfin, en cas d'atterrissage en catastrophe (configuration de crash), la tige 40 et les pistons 43 et 45 pénètrent à très haute vitesse dans le corps cylindrique 12, de sorte que sous l'effet de la surpression brutale dans la chambre 38, le clapet de surpression 66 s'ouvre et l'huile hydraulique est transférée par la plus grande section de passage possible de la chambre 38 vers le volume 37 adjacent aux chambres de gaz 36 et 35. Après être venue en butée contre la bague d'élastomère 55 du corps annulaire 53 du dispositif de laminage 27, la tige 40 continue sa course vers le fond 17 en déplaçant avec elle le dispositif de laminage 27, ce qui entraîne la déformation plastique par flambage du tube absorbeur d'énergie 22 qui se plisse en dissipant de l'énergie, comme représenté sur la figure 12. Dans cette configuration, l'amortisseur-vérin selon l'invention offre une surcourse d'amortissement à laquelle s'ajoutent les effets de la dissipation d'énergie par déformation plastique de l'absorbeur d'énergie 22.

La disposition de cet amortisseur-vérin, dont la réalisation permet de faire largement appel aux matériaux composites pour la réalisation de l'atterrisseur correspondant, peut être inversée si un piston séparateur est monté dans le manchon 13, entre le volume de fluide 37 qui baigne le dispositif de laminage 27 et la chambre de gaz à basse pression 36, de sorte que l'embout à rotule 19 peut être articulé sur le balancier et l'embout à rotule 42 sur le point fixe de la structure.

L'amortisseur-vérin selon l'invention, décrit comme étant intégré à une contre-fiche dans un atterrisseur à balancier, peut également être intégré dans une jambe d'atterrisseur à coulissement direct.

## Revendications

1. Amortisseur-vérin, destiné à l'équipement des trains d'atterrissage d'aérodynes, et du type chargé en compression, comprenant :
un corps cylindrique (12), dont une extrémité axiale est ouverte (16),
une tige cylindrique creuse (40) dont une extrémité axiale est ouverte et dont l'autre extrémité axiale (41) est fermée par un fond, la tige (40) étant engagée par sa partie d'extrémité axiale ouverte dans l'extrémité axiale ouverte (16) du corps (12), et montée coulissante avec étanchéité dans ce dernier,
un piston annulaire (43), monté coulissant avec étanchéité à l'intérieur du corps cylindrique (12) et solidaire en déplacement dans ce dernier de la partie de tige (40) interne au corps (12), en délimitant entre le corps et la tige une chambre annulaire de rentrée (48) que le piston annulaire (43) isole d'une chambre de fluide hydraulique contenue (38) dans le corps (12), l'alimentation en fluide hydraulique sous pression de la chambre annulaire (48) commandant la rentrée de la tige (40) dans le corps (12), alors que sa vidange autorise la sortie de la tige vers l'extérieur du corps (12),
un piston séparateur (45), monté coulissant avec étanchéité et entre deux butées (47,41) à l'intérieur de la tige (40), dans laquelle il délimite une chambre de sortie (51) que le piston séparateur (45) isole du fluide hydraulique (38) contenu dans le corps (12), l'alimentation en fluide hydraulique sous pression de la chambre de sortie (51) commandant la sortie de la tige vers l'extérieur du corps (12) tandis que sa vidange autorise la rentrée de la tige (40) dans le corps (12),
une chambre de gaz à basse pression (36), comprimée par un volume adjacent (37) de fluide hydraulique lorsque le fluide hydraulique contenu dans le corps (12) est comprimé par lesdits piston annulaire (43) et piston séparateur (45), sous l'effet de charges en compression s'exer çant sur l'amortisseur-vérin et faisant rentrer la tige (40) dans le corps (12),
un dispositif de laminage (27) logé dans le corps (12) et freinant les déplacements de la tige (40) dans le corps (12) par laminage du fluide hydraulique contenu dans le corps, et
une chambre de gaz à haute pression (35), également logée dans le corps (12), dans lequel elle est délimitée entre une paroi fixe (17) du corps et un organe séparateur (33) qui l'isole du fluide hydraulique et de la chambre de gaz à basse pression (36), et qui est comprimée dès que l'amortisseur-vérin est sollicité en compression par un effort supérieur à un seuil correspondant à une pression du gaz de la chambre à basse pression (36) égale à la pression de gonflage de la chambre de gaz à haute pression (35),
caractérisé en ce que la chambre de gaz à basse pression (36) est logée dans le corps (12), entre le dispositif de laminage (27) et la chambre de gaz à haute pression (35), dont elle n'est séparée que par l'organe séparateur, comprenant une membrane (33) souple qui est en appui, tant que la pression du gaz de la chambre à basse pression (36) n'est pas supérieure à la pression de gonflage de la chambre à haute pression (35), contre un support rigide (28) et perforé (31), solidaire du cylindre (12), et permettant la transmission de pression de la chambre à basse pression (36) vers la chambre à haute pression (35) par l'intermédiaire de la membrane (33), en limitant de façon absolue la déformation de la membrane (33) vers la chambre à basse pression (36) et le dispositif de laminage (27).

2. Amortisseur-vérin selon la revendication 1, caractérisé en ce que le support rigide perforé (28) est une cloison interne sensiblement transversale au corps (12) et qui comporte un fond hémisphérique (30) dont la concavité est tournée vers la chambre à haute pression (35) et percée d'une pluralité d'orifices de passage (31).

3. Amortisseur-vérin selon la revendication 2, caractérisé en ce que la membrane souple (33) est réalisée en une matière caoutchouteuse, élastiquement déformable, et comporte une partie centrale qui, en position de repos de l'amortisseur-vérin, présente une forme hémisphérique en appui contre la face concave du fond hémisphérique (30) de la cloison rigide perforée (28).

4. Amortisseur-vérin selon l'une des revendications 1 à 3, caractérisé en ce que la paroi fixe du corps (12) qui coopère avec la membrane (33) pour délimiter la chambre à haute pression (35) est formée par un fond (17) fixe fermant l'extrémité axiale du corps (12) du côté opposé à l'extrémité ouverte (16) dans laquelle est engagée la tige (40).

5. Amortisseur-vérin selon la revendication 4, caractérisé en ce que le corps (12) est constitué par l'assemblage axial d'un manchon cylindrique (13) et d'un embout d'extrémité (14) qui présente un évidement interne logeant la chambre de gaz à haute pression (35), ledit embout (14) étant fermé du côté opposé au manchon (13) par un fond (17) à paroi interne hémisphérique, et s'ouvrant dans le manchon (13) par une extrémité de l'embout (14) qui présente une bride radiale externe (18) par laquelle l'embout (14) est fixé à une bride radiale externe (15) de l'extrémité en regard du manchon (13).

6. Amortisseur-vérin selon l'une des revendications 1 à 5, caractérisé en ce que la membrane (33) présente une partie périphérique (34) par laquelle elle est fixée de manière étanche au corps (12).

7. Amortisseur-vérin selon la revendication 6 telle que rattachée à la revendication 5, caractérisé en ce que la partie périphérique par laquelle la membrane (33) est fixée au corps (12) est un bourrelet annulaire (34) pincé entre les brides (15,18) de fixation du manchon (13) à l'embout (14).

8. Amortisseur-vérin selon l'une des revendications 1 à 7, caractérisé en ce que le support rigide perforé (28) présente un bord périphérique (32) par lequel il est fixé au corps (12).

9. Amortisseur-vérin selon la revendication 8, telle que rattachée à la revendication 5 dépendant elle-même de la revendication 2, caractérisé en ce que le bord périphérique par lequel le support rigide perforé (28) est fixé au corps (12) est un collet annulaire (32) pincé entre les brides de fixation (15,18) du manchon (13) à l'embout (14) et en saillie radiale vers l'extérieur d'un tronc de cylindre (29) engagé dans le manchon (13) et raccordé au fond hémisphérique (30).

10. Amortisseur-vérin selon l'une des revendications 1 à 9, caractérisé en ce que le dispositif de laminage (27) est positionné dans le corps (12) par un absorbeur d'énergie (22) par déformation plastique, qui n'est sollicité qu'après la venue de la tige (40) en contact avec le dispositif de laminage (27).

11. Amortisseur-vérin selon la revendication 10 telle que rattachée à la revendication 5, caractérisé en ce que l'absorbeur d'énergie (22) est un organe tubulaire (24,25) engagé dans le manchon (13) cylindrique du corps (12), et solidaire du dispositif de laminage (27) par une extrémité axiale située du côté de la tige (40), alors que son extrémité axiale située du côté de l'embout (14) présente une bride radiale externe (23) serrée entre les brides (15, 18) de fixation du manchon (13) à l'embout (14).

12. Amortisseur-vérin selon l'une des revendications 1 à 11, caractérisé en ce que le dispositif de laminage (27) comprend un ensemble à clapet et orifice de laminage, de section de passage sélectivement variable en fonction de la pression du fluide hydraulique (38) et/ou de la vitesse d'enfoncement de la tige (40) dans le corps (12) et du sens de passage du fluide hydraulique.

13. Amortisseur-vérin selon l'une des revendications 1 à 12 , caractérisé en ce que le dispositif de la minage (27) comporte un corps annulaire (53) de positionnement d'un ensemble à clapet et orifice de laminage dans le corps cylindrique (12) et formant butée limitant l'enfon cement de la tige (40) dans le corps cylindrique (12) en conditions normales d'utilisation de l'amortisseur-vérin, le corps annulaire (53) étant disposé transversalement dans le corps cylindrique (12) et monté avec étanchéité (54) par sa paroi latérale externe dans ce dernier, et l'ensemble à clapet et orifice de laminage étant monté à l'intérieur du corps annulaire (53).

14. Amortisseur-vérin selon l'une des revendications 12 et 13, caractérisé en ce que l'ensemble à clapet et orifice de laminage comprend un premier disque (62), percé d'une pluralité de petits orifices de laminage (64) et disposé transversalement en position fixe dans le corps (12), et un clapet de freinage en détente (73), disposé du côté du premier disque (62) qui est tourné vers les chambres de gaz (35,36), et mobile entre deux positions, dont l'une est une position écartée du premier disque (62), dans laquelle le clapet de freinage (73) est amené par la compression du fluide hydraulique (38), éventuellement au-delà d'un premier seuil, résultant de l'enfoncement de la tige (40) dans le corps (12), afin d'autoriser le laminage en compression par les petits orifices (64) du premier disque (62), et dont l'autre position est une position accolée au premier disque (62) et dans laquelle le clapet de freinage (73) est amené par la détente d'au moins une chambre de gaz (35,36) et obture certains des petits orifices (64) du premier disque (62) afin d'autoriser le laminage en détente par les seuls orifices (64) non obturés du premier disque (62) et de freiner les sorties de la tige (40) vers l'extérieur du corps cylindrique (12).

15. Amortisseur-vérin selon la revendication 14, caractérisé en ce que le premier disque (62) est également percé d'au moins un grand orifice (65) de section de passage très supérieure à celle des petits orifices de laminage (64) et qui est normalement fermé par l'obturateur (67) d'un clapet de surpression (66) sollicité élastiquement (72) de manière à plaquer l'obturateur (67) contre le premier disque (62), le clapet de surpression (66) étant déplacé à l'encontre des moyens élastiques (72) qui le sollicitent de manière à écarter l'obturateur (67) du premier disque (62) et autoriser le passage du fluide hydraulique par le ou les grands orifices (65) en cas de surpression occasionnée par un enfoncement à vitesse élevée de la tige (40) dans le corps (12) et dépassant un seuil d'actionnement des moyens élastiques (72).

16. Amortisseur-vérin selon la revendication 15, caractérisé en ce que l'obturateur (67) du clapet de surpression (66) est disposé du côté du premier disque (62) qui est tourné vers les chambres de gaz (36,35) et forme simultanément un piston de surpression qui est soumis à la pression du fluide hydraulique passant par le ou les grands orifices (65), et sur lequel s'exerce un effort résultant, antagoniste à l'action des moyens élastiques (72) sollicitant le clapet de surpression (66) dans le sens de la fermeture.

17. Amortisseur-vérin selon la revendication 16, caractérisé en ce que le clapet de surpression (66) constitue simultanément un support sur lequel le clapet de freinage en détente (73) est monté mobile.

18. Amortisseur-vérin selon la revendication 17, caractérisé en ce que le clapet de freinage en détente (73) a la forme d'un anneau circulaire (74) présentant des languettes d'obturation (75) en saillie radiale vers l'extérieur, et destinées chacune à obturer respectivement l'un de ceux des petits orifices de laminage (64) qui sont à obturer par le clapet de freinage en détente (73).

19. Amortisseur-vérin selon la revendication 18, caractérisé en ce que le clapet de freinage en détente (73) est monté pivotant par son bord radial interne dans une gorge périphérique (69) ouverte radialement vers l'extérieur sur le clapet de surpression (66).

20. Amortisseur-vérin selon la revendication 19, caractérisé en ce que les petits orifices de laminage (64) sont répartis, sur le premier disque percé (62), autour d'un unique grand orifice (65), et le clapet de surpression (66) a sensiblement la forme d'un champignon, dont le chapeau présente une partie radiale interne (67), formant l'obturateur et le piston de surpression, qui est séparée par la gorge périphérique (69) dans laquelle est engagé le bord radial interne du clapet de freinage en détente (73), d'une partie annulaire radiale externe (68) formant une butée d'appui du clapet de freinage en détente (73) lorsque ce dernier est écarté du premier disque (62), et le pied (70) du clapet de surpression (66) en forme de champignon s'étend axialement, avec un important jeu radial, au travers du grand orifice (65) et est monté coulissant au travers d'un second disque (61), percé d'orifices de laminage (63) de section de passage supérieure à celle des petits orifices (64) du premier disque percé (62) et axialement espacé du premier disque (62) du côté tourné vers la tige (40), l'extrémité du pied (70) faisant saillie vers la tige (40) au-delà du second disque (61) étant filetée, et un écrou (71) étant vissé sur cette extrémité filetée du pied (70) et formant une butée contre laquelle prend appui une extrémité d'un ressort de compression (72) dont l'autre extrémité prend appui contre le second disque (61), afin de rappeler le clapet de surpression (66) axialement vers la tige (40) pour appliquer l'obturateur (67) contre le premier disque percé (62).

21. Amortisseur-vérin selon la revendication 20, telle que rattachée à la revendication 13, caractérisé en ce que le premier et le second disque percé (62, 61) sont les disques centraux de deux organes en forme d'assiette (56, 57) serrés l'un contre l'autre par leurs parties périphériques (58, 59) qui sont retenues par des organes de fixation (60) sur le corps tubulaire (53) du dispositif de laminage (27).

22. Contre-fiche élastique et de manoeuvre, destinée à l'équipement d'un atterrisseur (3) d'aérodyne (1), caractérisée en ce qu'elle comprend un amortisseur-vérin selon l'une des revendications 1 à 21 précédentes, dont le fond (41) de la tige (40) est solidaire d'un embout rotulé (42) d'articulation sur un organe non suspendu (6,7) de l'atterrisseur (3) correspondant, et dont le fond (17) du corps cylindrique (12) est solidaire d'un embout rotulé (19) d'articulation sur un organe structural suspendu et lié (11) à la structure de l'aérodyne (1).

23. Train d'atterrissage pour aérodyne, en particulier atterrisseur principal à balancier pour hélicoptère, comprenant:
une jambe d'atterrisseur (4), montée oscillante autour d'un axe de fusée (5) solidaire de la structure de l'aérodyne (1),
au moins une roue (6) à pneumatique (7), supportée par la jambe (4), et
une contre-fiche (9) de manoeuvre et de contreventement de la jambe (4), articulée par une extrémité (17, 19) sur un organe structural lié à la structure de l'aérodyne (1) et par l'autre extrémité (41-42) sur la jambe (4), entre la ou les roues (6) et le point de pivotement de la jambe (4) sur la fusée (5),
caractérisé en ce que la contre-fiche de manoeuvre et de contreventement est une contre-fiche selon la revendication 22.

**Claims**

1. A shock absorber-actuator, intended for fitting to landing gear on aerodynes, of the compression loaded type, comprising:
a cylindrical body (12), one axial end of which is open (16),
a hollow cylindrical stem (40), one axial end of which is open and the other axial end (41) of which is closed by a base, the stem (40) being engaged by its open axial end part in the open axial end (16) of the body (12), and mounted so as to slide fluid-tight in the latter,
an annular piston (43), mounted so as to slide fluid-tight inside the cylindrical body (12) and integral, whilst moving in the latter, with the part of the stem (40) inside the body (12), defining between the body and the stem an annular return chamber (48) which the annular piston (43) isolates from a hydraulic fluid chamber contained (38) in the body (12), the supply of hydraulic fluid under pressure to the annular chamber (48) actuating the return of the stem (40) into the body (12), whilst its emptying permits the stem to move towards the outside of the body (12),
a separator piston (45), mounted so as to slide fluid-tight between two stops (47, 41) inside the stem (40), in which it defines an outlet chamber (51) which the separator piston (45) isolates from the hydraulic fluid (38) contained in the body (12), the supply of hydraulic fluid under pressure to the outlet chamber (51) actuating the movement of the stem towards the outside of the body (12) whilst its emptying permits the return of the stem (40) into the body (12),
a low pressure gas chamber (36), compressed by an adjacent volume (37) of hydraulic fluid when the hydraulic fluid contained in the body (12) is compressed by the said annular piston (43) and separator piston (45), under the effect of compression loads exerted on the shock absorber-actuator and causing the stem (40) to return into the body (12),
a throttling device (27) housed :Ln the body (12) and damping the movements of the stem (40) in the body (12) through restricted flow of the hydraulic fluid contained in the body, and
a high pressure gas chamber (35), also housed in the body (12), in which it is defined between a fixed wall (17) of the body and a separator device (33) which isolates it from the hydraulic fluid and the low pressure gas chamber (36), and which is compressed as soon as the shock ~bsorber-actuator is put under compression loading by a force g:reater than a threshold corresponding to a gas pressure in the low pressure chamber (36) equal to the charged pressure of the high pressure gas chamber (35),
characterised in that the low pressure gas chamber (36) is housed in the body (12), between the throttling device (27) and the high pressure gas chamber (35), from which it is separated only by the separator device, comprising a flexible diaphragm (33) which bears, as long as the pressure of the gas in the low pressure chamber (36) is not greater than the charged pressure of the high pressure chamber (35), against a rigid (28) and perforated (31) support, integral with the cylin.der (12), and permitting the transmission of pressure from th.e low pressure chamber (36) to the high pressure chamber (35) t.hrough the diaphragm (33), whilst limiting absolutely any deformat.ion of the diaphragm (33) towards the low pressure chamber (36) and the throttling device (27).

2. A shock absorber-actuator ac:cording to claim 1, characterised in that the perforated rigid support (28) is an internal partition approximately at right: angles to the body (12) and which has a hemispherical base (30), the concavity of which is oriented towards the high pressure chamber (35) and has in it a plurality of transfer orifices (31).

3. A shock absorber-actuator according to claim 2, characterised in that the flexible diaphragm (33) is produced from a rubbery material, elastically deformable, and has a central part which, in the position of rest of the shock absorber-actuator, has a hemispherical shape bearing against the concave face of the hemispherical base (30) of the perforated rigid partition (28).

4. A shock absorber-actuator according to one of claims 1 to 3, characterised in that the fixed wall of the body (12) which interacts with the diaphragm (33) to define the high pressure chamber (35) is formed by a fixed base (17) closing off the axial end of the body (12) at the opposite end to the open end (16) in which the stem (40) is engaged.

5. A shock absorber-actuator according to claim 4, characterised in that the body (12) is formed by the axial assembly of a cylindrical sleeve (13) and an end piece (14) which has an internal recess housing the high pressure gas chamber (35), the said end piece (14) being closed at the end opposite to the sleeve (13) by a base (17) with a hemispherical internal wall, and opening into the sleeve (13) through an end of the end piece (14) which has an external radial flange (18) by which the end piece (14) is fixed to an external radial flange (15) on the end facing the sleeve (13).

6. A shock absorber-actuator according to one of claims 1 to 5, characterised in that the diaphragm (33) has a peripheral part (34) by which it is fixed in a fluid-tight manner to the body (12).

7. A shock absorber-actuator according to claim 6 as related to claim 5 characterised in that the peripheral part by which the diaphragm (33) is fixed to the body (12) is an annular rim (34) gripped between the flanges (15, 18) which fix the sleeve (13) to the end piece (14).

8. A shock absorber-actuator according to one of claims 1 to 7 characterised in that the perforated rigid support (28) has a peripheral edge (32) by which it is fixed to the body (12).

9. A shock absorber-actuator according to claim 8 as related to claim 5 itself appertaining to claim 2 characterised in that the peripheral edge by which the perforated rigid support (28) is fixed to the body (12) is an annular collar gripped between the flanges (15, 18) fixing the sleeve (13) to the end piece (14) and projecting radially towards the outside of a truncated cylinder (29) engaged in the sleeve (13) and connected to the hemispherical base (30).

10. A shock absorber-actuator according to one of claims 1 to 9 characterised in that the throttling device (27) is positioned in the body (12) by a plastic deformation energy absorber (22) which is acted upon only after tlle stem (40) comes into contact with the throttling device (27).

11. A shock absorber-actuator according to claim 10 as related to claim 5 characterised in that: the energy absorber (22) is a tubular member (24, 25) engaged in the cylindrical sleeve (13) of the body (12) and attached to the throttling device (27) through an axial end situated on the stem (40) side whilst its axial end situated on the end piece (14) side has an external radial flange (23) gripped between the flanges (15, 18) which fix the sleeve (13) to the end piece (14).

12. A shock absorber-actuator according to one of claims 1 to 11, characterised in that the throttling device (27) comprises a valve and throttling orifice assembly, with a passage having a cross section which is selectively variable depending on the pressure of the hydraulic fluid (38) and/or the speed at which the stem (40) is driven into the body (12) and the direction of travel of the hydraulic fluid.

13. A shock absorber-actuator according to one of claims 1 to 12, characterised in that the throttling device (27) has an annular body (53) for positioning a valve and throttling orifice assembly in the cylindrical body (12) and forming a stop limiting the travel of the stem (40) in the cylindrical body (12) under normal conditions of use of the shock absorber-actuator, the annular body (53) being disposed transversely in the cylindrical body (12) and mounted fluid-tight: (54) in the latter by means of its lateral wall, and the valve and throttling orifice assembly being mounted inside the annular body (53).

14. A shock absorber-actuator according to one of claims 12 and 13, characterised in that the valve and throttling orifice assembly comprises a first disc (62), having a plurality of small throttling orifices (64) and disposed transversely in a fixed position in the body (12), and a valve for damping in expansion (73), disposed on the side next to the first disc (62) which is oriented towards the gas chambers (35, 36), and movable between two positions, one of which is a position separated from the first disc (62), into which the damping valve (73) is moved by the compression of the hydraulic fluid (38), possibly beyond a first threshold, resulting from the movement of the stem (40) into the body (12), in order to permit the throttling in compression by the small orifices (64) in the first disc (62), and the other position of which is a position pressed against the first disc (62) and into which the damping valve (73) is moved by the expansion in at least one gas chamber (35, 36) and closes off some of the small orifices (64) in the first disc (62) in order to .permit the throttling in expansion by solely those orifices (64) in the first disc (62) which are not shut off and to dampen the outward movements of the stem (40) towards the outside of the cylindrical body (12).

15. A shock absorber-actuator according to claim 14 characterised in that the first disc (62) also has in it at least one large orifice (65) whose passage has a cross section very much greater than that of the small throttling orifices (64) and which is normally closed by the seal (67) of a pressure relief valve (66) acted upon elastically (72) so as to press the seal (67) against the first disc (62) the pressure relief valve (66) being moved in opposition to elastic means (72) which act upon it so as to move the seal (67) away from the first disc (62) and permit the hydraulic fluid to pass through the large orifice or orifices (65) in the event of overpressure caused by the stem (40) moving at high speed into the body (12) and exceeding an actuating threshold of the elastic means (72).

16. A shock absorber-actuator ac:cording to claim 15 characterised in that the seal (67) of the pressure relief valve (66) is disposed on the side of the first disc (62) which is oriented towards the gas chambers (36, 35) and forms at the same time an overpressure piston which is subjected to the pressure of the hydraulic fluid passing through the large orifice or orifices (65), and on which a resultant force is exerted, opposed to the action of the elastic means (72) forcing the pressure relief valve (66) in the direction of closing.

17. A shock absorber-actuator according to claim 16 characterised in that the pressure relief valve (66) forms simultaneously a support on which the valve for damping in expansion (73) is mounted movably.

18. A shock absorber-actuator according to claim 17, characterised in that the valve for damping in expansion (73) is in the shape of a circular ring (74) having sealing fingers (75) projecting radially towards the outside, each intended to seal respectively one of those of the small throttling orifices (64) which are to be sealed by the valve for damping in expansion (73).

19. A shock absorber-actuator according to claim 18, characterised in that the valve for damping in expansion (73) is mounted so as to pivot by its inner radial edge in a peripheral recess (69) open radially towards the outside on the pressure relief valve (66).

20. A shock absorber-actuator ac:cording to claim 19, characterised in that the small throttling orifices (64) are distributed, on the first piercecl disc (62), around a single large orifice (65) and the pressure relief valve (66) is approximately in the shape of the mushroom, whose cap has an internal radial part (67), forming the seal and the overpressure piston, which is separated by the peripheral recess (69) in which is engaged the inner radial edge of the valve for damping in expansion (73), from an outer raclial annular part (68) forming a stop for the valve for damping in expansion (73) when the latter is moved away from the first disc (62), and the stem (70) of the mushroom shaped pressure relief valve (66) extends axially, with considerable radial play, through the large orifice (65) and is mounted so as to slide through a second disc (61), provided with throttling orifices (63) with passages of a cross section greater than that of the small orifices (64) in the first pierced disc (62) and axially spaced apart frc‚ m the first disc (62) on the side oriented towards the stem (40), the end of the stem (70) projecting towards the stem (40) beyond the second disc (61) being threaded, and a nut (71) being screwed onto this threaded end of the stem (70) and forming a stop against which one end of a compression spring (72) bears, the other end of which bears against the second disc (61), in order to return the pressure relief valve (66) axially towarcls the stem (40) to press the seal (67) against the first pierced disc (62).

21. A shock absorber-actuator according to claim 20, as related to claim 13, characterised in that the first and second pierced discs (62, 61) are the central discs of two components in the form of a plate (56, 57) pressed against each other at their peripheral parts (58, 59) which are held by fixing means (60) on the tubular body (53) of the throttling device (27).

22. An elastic actuating strut, intended for fitting to an undercarriage (3) on an aerodyne (1), characterised in that it comprises a shock absorber-actuator according to one of claims 1 to 21 above, in which the base (41) of the stem (40) is integral with a pivoted end piece (42) for articulating on an unsuspended member (6, 7) on the corresponding undercarriage (3), and in which the base (17) of the cylindrical body (12) is integral with a pivoted end piece (19) for articulating on a suspended structural member and connected (11) to the structure of the aerodyne (1).

23. Landing gear for an aerodyne, in particular a main rocker arm undercarriage for a helicopter, comprising:

an undercarriage leg (4), mounted so as to oscillate about the axis of a shaft (5) attached to t.he structure of the aerodyne (1),

at least one wheel (6) with a tyre (7), supported by the leg (4), and

a strut (9) for manoeuvring and bracing the leg (4), articulated at one end (17, 19) on a structural member connected to the structure of the aerodyne (1) and at the other end (41-42) on the leg (4), between the wheel or wheels (6) and the point at which the leg (4) pivots on the shaft (5),

characterised in that the manoeuvring and bracing strut is a strut according to claim 22.

**Patentansprüche**

1. Dämpfer-Heber vom Druck.belastungstyp zur Verwendung in Fahrgestellen von Luftfahrzeugen, mit:

einem zylindrischen Körper (12), dessen eines axiales Ende (16) offen ist,

einer hohlen, zylindrischen Stange (40), deren eines axiales Ende offen und deren anderes axiales Ende (41) von einem Boden abgeschlossen ist, wobei die Stange (40) mit ihrem offenen axialen Endstück in das offene axiale Ende (16) des Körpers (12) eingeführt und abgedichtet verschiebbar in letzterem gehalten ist,

einem ringförmigen Kolben (43), der abgedichtet verschiebbar im Inneren des zylindrischen Körpers (12) angebracht und zur Verschiebung in letzterem mit dem im Inneren des Körpers (12) befindlichen Teil der Stange (40) verbunden ist, um zwischen Körper und Stange eine Einschiebe-Ringkammer (48) einzugrenzen, die von dem Ringkolben (43) von einer mit einer hydraulischen Flüssigkeit gefüllten Kammer (38) in dem Körper (12) getrennt wird, wobei die Zufuhr von Hydraulikflüssigkeit unter Druck in die Ringkammer (48) das Einschieben der Stange (40) in den Körper (12) steuert, während: ihr Ablassen das Ausfahren der Stange aus dem Körper (12) gestattet,

einem Trennkolben (45), der abgedichtet verschiebbar zwischen zwei Anschlägen (47, 41) im Inneren der Stange (40) angebracht ist, in welcher er eine Ausfahr-Kammer (51) begrenzt, die von dem Trennkolben (45) von der Hydraulikflüssigkeit (38) in dem Körper (12) getrennt wird, wobei die Zufuhr von Hydraulikflüssigkeit unter Druck in die Ausfahr-Kammer (51) das Ausfahren der Stange aus dem Körper (12) steuert, während ihr Ablassen das Einschieben der Stange (40) in den Körper (12) gestattet,
einem unter niedrigem Druck stehenden Gasraum (36), der von einem angrenzenden Hydraulikflüssigkeitsvolumen (37) komprimiert wird, wenn die Hydraulikflüssigkeit in dem Körper (12) durch den Ringkolben (43) und den Trennkolben (45) unter dem Einfluß einer Druckbelastung unter Druck gesetzt wird, die auf den Dämpfer-Heber einwirkt und ein Einschieben der Stange (40) in den Körper (12) verursacht, einer in dem Körper (12) befindlichen, Verschiebungen der Stange (40) in dem Körper (12) ab-bremsenden Drosseleinrichtung (27) zur Drosse-lung der Hydraulikflüssigkeit in dem Körper und einem unter hohem Druck stehenden Gasraum (35), der ebenfalls in dem Körper (12) angeordnet ist, in welchem dieser zwischen einer festen Wandung (17) des Körpers und einem Trennorgan (33) begrenzt ist, das diesen von der Hydraulikflüssigkeit und von dem Niederdruckgasraum (36) trennt, und der komprimiert wird, sobald der Dämpfer-Heber in stä.rkerem Maße druckbelastet wird als bis zu einem Schwellenwert, der einem Gasdruck im Niederdruckraum (36) entspricht, welcher gleich groß ist wie der Fülldruck des Hochdruckgasraums (35),
dadurch gekennzeichnet, daß der Niederdruckgasraum (36) in dem Körper (12) zwischen der Drosseleinrichtung (27) und dem Hochdruckgasraum (35) angeordnet ist, von welchem er nur durch ein Trennorgan abgetrennt ist, das eine biegsame Membran (33) beinhaltet, die, solange der Gasdruck im Niederdruckraum (36) nicht größer ist als der Fülldruck des Hochdruckraums ( 35 ), von einem starren, mit einer Perforation (31) versehenen Träger (28) gestützt ist, der mit dem Körper (12) verbunden ist und die Druckübertragung vom Niederdruckraum ( 36 ) zum Hochdruckraum ( 35 ) vermittels der Membran (33) unter Begrenzung der Durchbiegung der Membran (33) gegen den Niederdruckraum (36) und die Drosseleinrichtung (27) auf eine absolute Form ermöglicht.

2. Dämpfer-Heber nach Anspruch 1, dadurch gekennzeichnet, daß der starre, perforierte Träger (28) eine innere, im wesentlichen zum Körper (12) transversale Wandung bildet und einen halbkugelförmigen Boden (30) umfaßt, dessen konkave Fläche dem Hochdruckraum (35) zugewandt und von einer Vielzahl von Durchlaßöffnungen (31) durchbrochen ist.

3. Dämpfer-Heber nach Anspruch 2, dadurch gekennzeichnet, daß die biegsame Membran (33) aus einem kautschukartigen, elastisch deformierbaren Material besteht und einen zentralen Bereich beinhaltet, welcher in der Ausgangslage des Dämpfer-Hebers gestützt gegen die konkave Fläche des halbkugelförmigen Bodens (30) der starren, perforierten Trennwand (28) eine halbkugelförmige Gestalt aufweist.

4. Dämpfer-Heber nach einem der Ansprüche 1 bis 3, dadurch gekennzeichnet, daß die feste, mit der Membran (33) zur Begrenzung des Hochdruckraums (35) zusammenwirkende Wandung des Körpers (12) von einem festen Boden (17) gebildet ist, welcher das dem offenen Ende (16), in das die Stange (40) eingeführt ist, gegenüberliegende axiale Ende des Körpers (12) verschließt.

5. Dämpfer-Heber nach Anspruch 4, dadurch gekennzeichnet, daßB der Körper (12) aus der axialen Aneinanderfügung eines Zylindermantels (13) und eines Anschlußendstücks (14) gebildet ist, das eine innere, den Hochdruckgasraum (35) aufnehmende Aussparung besitzt, wobei das Anschlußstück (14) auf der dem Mantel (13) gegenüberliegenden Seite von einem Boden mit halb kugelförmiger Innenwandung abgeschlossen ist und sich zum Mantel (13) hin mit einem Ende des Anschlußstücks (14) öffnet, welches als ein radialer Außenflansch (18) gestaltet ist, durch den das Anschlußstück (14) an einem radialen Außenflansch (15) am Ende des Mantels (13) angebracht ist.

6. Dämpfer-Heber nach einem der Ansprüche 1 bis 5, dadurch gekennzeichnet, daß die Membran (33) einen randseitigen Bereich (34) aufweist, mit dem sie dicht an der Hülse (12) befestigt ist.

7. Dämpfer-Heber nach Anspruch 6 sowie in Verbindung mit Anspruch 5, dadurch gekennzeichnet, daß der Umfangsbereich, mit dem die Membran (33) an dem Körper (12) befestigt ist, ein Ringwulst (34) ist, der zwischen die Flansche (15, 18) zur Befestigung von Mantel (13) und Anschlußstück (14) geklemmt ist.

8. Dämpfer-Heber nach einem der Ansprüche 1 bis 7, dadurch gekennzeichnet, daß der starre, perforierte Träger (28) einen Umfangsrand (32) aufweist, mit dem er an dem Körper (12) befestigt ist.

9. Dämpfer-Heber nach Anspruch 8 sowie in Verbindung mit dem vom Anspruch 2 abhängigen Anspruch 5, dadurch gekennzeichnet, daß der Umfangsrand, durch den der starre, perforierte Träger (28) an dem Körper (12) befestigt ist, als ringförmige Abkragung (32) gestaltet ist, die zwischen die Befestigungsflansche (15, 18) des Mantels (13) und des Anschlußstücks (14) eingeklemmt und vom Ende eines Zylinderschaftes (29) abgekragt ist, der in den Mantel (13) hineinragt und mit dem halbkugelförmigen Boden (30) verbunden ist.

10. Dämpfer-Heber nach einem der Ansprüche 1 bis 9, dadurch gekennzeichnet, daß die Drosseleinrichtung (27) in dem Körper (12) durch einen plastisch verformbaren Energieabsorber (22) positioniert ist, welcher nur nach Kontaktnahme der Stange (40) mit der Drosseleinrichtung (27) beansprucht wird.

11. Dämpfer-Heber nach Anspruch 10 sowie in Verbindung mit Anspruch 5, dadurch gekennzeichnet, daß der Energieabsorber (22) ein röhrenförmiges, in den zylindrischen Mantel (13) des Körpers (12) eingebrachtes Organ (24, 25) ist, das mit einem zur Stange (40) hin gelegenen axialen Ende mit der Drosseleinrichtung (27) verbunden ist, während sein dem Anschlußstück (14) zugewandtes axiales Ende einen nach außen weisenden, radialen Flansch (23) aufweist, der zwischen die Befestigungsflansche (15, 18) von Mantel (13) und Anschlußstück (14) eingeklemmt ist.

12. Dämpfer-Heber nach einem der Ansprüche 1 bis 11, dadurch gekennzeichnet, daß die Drosseleinrichtung (27) eine Anordnung von Klappen und Drosselöffnungen beinhaltet, wobei der Durchlaßquerschnitt selektiv in Abhängigkeit vom Druck der Hydraulikflüssigkeit (38) und/oder der Einschubgeschwindigkeit der Stange (40) in den Körper (12) und der Strömungsrichtung der Hydraulikflüssigkeit veränderbar ist.

13. Dämpfer-Heber nach einem der Ansprüche 1 bis 12, dadurch gekennzeichnet, daß die Drosseleinrichtung (27) einen Ringkörper (53) zur Positionierung der Anordnung der Klappen und Drosselöffnungen im zylindrischen Körper (12) beinhaltet, der einen die Einschubbewegung der Stange (40) in den zylindrischen Körper (12) unter normalen Betriebsbedingungen des Dämpfer-Hebers begrenzenden Anschlag bildet, wobei der Ringkörper (53) transversal im zylindrischen Körper (12) angeordnet und in diesen mit seiner äußeren Seitenwand abdichtend (54) eingebaut ist und wobei die Anordnung der Klappen und der Drosselöffnungen an der Innenseite des Ringkörpers (53) angebracht ist.

14. Dämpfer-Heber nach Anspruch 12 oder 13, dadurch gekennzeichnet, daß die Anordnung der Klappen und Drosselöffnungen eine erste Scheibe (62), die von einer Mehrzahl enger Drosselöffnungen (64) durchbrochen und transversal in einer fixierten Lage im Körper (12) angeordnet ist, und eine Druckminderungsbremsklappe (73) beinhaltet, die an derjenigen Seite der ersten Scheibe (62) angeordnet ist, die den Gasräumen (35, 36) zugewandt ist, und die zwischen zwei Positionen bewegbar ist, von denen die eine eine von der ersten Scheibe (62) beabstandete Position ist, in die die Bremsklappe (73) durch den eventuell über einen ersten Schwellenwert hinausgehenden Druck der Hydraulikflüssigkeit (38) gelangt, der aus dem Einschieben der Stange (40) in den Körper (12) resultiert, um die Drosselung unter Druck mittels der engen Öffnungen (64) der ersten Scheibe (62) zu gestatten, und von denen die andere Position eine an der ersten Scheibe (62) anliegende Position ist, in welcher die Bremsklappe (73) durch Druckminderung wenigstens eines der Gasräume (35, 36) gelangt und bestimmte der engen Öffnungen (64) der ersten Scheibe (62) verschließt, um die Drosselung zur Druckminderung nur noch durch die nicht verschlossenen Öffnungen (64) der ersten Scheibe (62) zu gestatten und so das Ausfahren der Stange (40) aus dem zylindrischen Körper (12) abzubremsen.

15. Dämpfer-Heber nach Anspruch 14, dadurch gekennzeichnet, daß die erste Scheibe (62) auch von wenigstens einer weiten, einen gegenüber den engen Drosselöffnungen (64) sehr viel größeren Durchlaßquerschnitt aufweisenden Öffnung (65) durchbrochen ist und daß diese normalerweise von einem Verschluß (67) eines derart unter elastischer Spannung (72) stehenden Überdruckventils (66) verschlossen ist, daß der Verschluß (67) flach gegen die erste Scheibe (62) anliegt, wobei das Überdruckventil (66) gegen die elastischen Mittel (72) diese derart unter Spannung setzend verschieblich ist, daß im Fall eines durch ein Einschieben der Stange (40) mit hoher Geschwindigkeit in den Körper (12) verursachten und eine Ansprechschwelle der elastischen Mittel (72) überschreitenden Überdrucks sich der Verschluß (67) von der ersten Scheibe (62) entfernt und ein Durchströmen der Hydraulikflüssigkeit durch die wenigstens eine weite Öffnung (65) ermöglicht.

16. Dämpfer-Heber nach Anspruch 15, dadurch gekennzeichnet, daß der Verschluß (67) des Überdruckventils (66) auf derjenigen Seite der ersten Scheibe (62) angeordnet ist, die den Gasräumen (36, 35) zugewandt ist und gleichzeitig einen Überdruckkolben bildet, welcher unter dem Druck der durch die wenigstens eine weite Öffnung (65) strömenden Hydraulikflüssigkeit steht, und daß auf ihn eine resultierende Druckkraft einwirkt, welche der von den mit dem Überdruckventil (66) verbundenen elastischen Mittel (72) im Sinne des Verschließens erzeugten Wirkung entgegengerichtet ist.

17. Dämpfer-Heber nach Anspruch 16, dadurch gekennzeichnet, daß das Überdruckventil (66) gleichzeitig einen Träger bildet, auf dem die Druckminderungsbremsklappe (73) beweglich angebracht ist.

18. Dämpfer-Heber nach Anspruch 17, dadurch gekennzeichnet, daß die Druckminderungsbremsklappe (73) die Form eines Kreisrings (77) besitzt, der radial nach außen abkragende Verschlußzungen (75) aufweist, von denen jede jeweils zum Verschließen einer der engen Drosselöffnungen (64) dient, die durch die Druckminderungsbremsklappe (73) zu verschließen sind.

19. Dämpfer-Heber nach Anspruch 18, dadurch gekennzeichnet, daß die Druckminderungsbremsklappe (73) klappbar mit ihrem radialen Innenrand am Überdruckventil (66) in einer radial nach außen offenen Umfangsrille (69) angebracht ist.

20. Dämpfer-Heber nach Anspruch 19, dadurch gekennzeichnet, daß die engen Drosselöffnungen (64) in der ersten durchbrochenen Scheibe (62) um eine bestimmte, weite Öffnung (65) herum verteilt angeordnet sind und daß das Überdruckventil (66) im wesentlichen die Form eines Pilzes hat, dessen Hut einen den Verschluß und das Überdruckventil bildenden radialen Innenbereich (67) aufweist, der durch die Umfangsrille (69), mit der der radiale Innenrand der Druckminderungsbremsklappe (73) verbunden ist, von einem ringförmigen, radialen Außenbereich (68) getrennt ist, welcher einen Begrenzungsanschlag für die Druckminderungsbremsklappe (73) bildet, von welchem letztere von der ersten Scheibe (62) beabstandet ist, und daß der Fuß (70) des pilzförmigen Überdruckventils (66) sich mit großem radialem Spiel axial durch die weite Öffnung (65) hindurch erstreckt und durch eine zweite Scheibe (61) hindurch verschieblich angeordnet ist, die von Drosselöffnungen (63) durchbrochen ist, deren Durchlaßquerschnitt größer ist als derjenige der engen Öffnungen (64) der ersten durchbrochenen Scheibe (62) und die mit axialem Zwischenraum zu der in Richtung der Stange (40) weisenden Seite der ersten Scheibe (62) angeordnet ist, wobei das Fußende (70) einen sich in Richtung der Stange (40) über die zweite Scheibe (61) hinaus erstreckenden, mit einem Gewinde versehenen Vorsprung bildet und wobei eine Mutter (71) auf das mit dem Gewinde versehene Fußende (70) aufgeschraubt ist und einen Anschlag bildet, gegen den ein Ende einer Druckfeder (72) anliegt, deren anderes Ende gegen die zweite Scheibe (61) anliegt, um so das Überdruckventil (66) axial in Richtung der Stange (40) zurückzudrücken, wodurch der Verschluß (67) gegen die erste, durchbrochene Scheibe (62) angedrückt wird.

21. Dämpfer-Heber nach Anspruch 20 sowie in Verbindung mit Anspruch 13, dadurch gekennzeichnet, daß die erste und die zweite durchbrochene Scheibe (62, 61) zentrierte Scheiben zweier tellerförmiger Einrichtungen (56, 57) sind, welche mit ihren Umfangsrändern (58, 59), die mit Befestigungsmitteln (60) auf dem röhrenförmigen Körper (53) der Drosseleinrichtung (27) gehalten sind, aneinander befestigt sind.

22. Elastische und steuerbare Strebe zur Verwendung in einem Fahrgestell (3) eines Luftfahrzeugs (1), dadurch gekennzeichnet, daß sie einen Dämpfer-Heber nach einem der Ansprüche 1 bis 21 enthält, dessen Boden (41) der Stange (40) mit einem Gelenkstangenkopf (42) mit einer nicht aufgehängten Einrichtung (6, 7) des zugehörigen Fahrgestells (3) verbunden ist und dessen Boden (17) des Zylinderkörpers (12) mit einem Gelenkstangenkopf (19) verbunden ist, der sich an einer an der Rahmenstruktur des Luftfahrzeugs (1) aufgehängten und damit verbundenen Struktureinrichtung (11) befindet.

23. Fahrgestell für ein Luftfahrzeug, insbesondere ein ausbalancierendes Hauptfahrwerk für einen Hubschrauber, mit:
einem Fahrgestellbein (4), das um eine Spindelachse (5) verschwenkbar an der Rahmenstruktur des Luftfahrzeugs (1) befestigt ist, wenigstens einem Rad (6) mit Luftbereifung (7), das von dem Bein (6) getragen ist, und
einer steuerbaren und das Bein (4) versteifenden Strebe (9), die mit einem Ende (17, 19) an einer mit der Rahmenstruktur des Luftfahrzeugs (1) verbundenen Struktureinrichtung und mit dem anderen Ende (41-42) an dem Bein (4) zwischen dem oder den Rädern (6) und dem Drehpunkt des Beins (4) an der Spindel (5) angelenkt ist,
dadurch gekennzeichnet, daß die steuerbare und versteifende Strebe eine Strebe gemäß Anspruch 22 ist.

FIG.1a

FIG.1b

FIG.1

FIG.2

EP 0 275 735 B1

FIG. 3

FIG. 4

EP 0 275 735 B1

FIG. 5

FIG.6

FIG.7

FIG.8

FIG.9

FIG.10

EP 0 275 735 B1

FIG. 11

FIG. 12

FIG. 13